# EUROPÄISCHE PATENTSCHRIFT

(11) **EP 2 573 630 B1**
(45) Veröffentlichungstag und Bekanntmachung des Hinweises auf die Patenterteilung: **17.05.2017**
(21) Anmeldenummer: 11193728.0
(22) Anmeldetag: 15.12.2011
(51) Int. Cl.: G05B 15/02, H02J 9/06, H05B 37/02, H04W 84/10

(54) **Notlichtbeleuchtungsanlage mit Datenkommunikationsfähigkeiten**
Emergency lighting assembly with data communication capabilities
Installation d'éclairage de secours équipée de fonctions de communication de données

(30) Priorität: 23.09.2011 DE 102011053883
(43) Veröffentlichungstag der Anmeldung: 27.03.2013
(73) Patentinhaber: RP-Technik GmbH, 63110 Rodgau (DE)
(72) Erfinder: Ranostaj, Frank, 60437 Frankfurt am Main (DE)
(74) Vertreter: Cremer, Christian

(56) Entgegenhaltungen:
- WO-A1-2010/097738
- US-A1- 2002 080 027
- US-A1- 2007 293 208
- US-B1- 6 754 602

## Beschreibung

Die vorliegende Erfindung betrifft eine Notlichtbeleuchtungsanlage und ein Verfahren zum Betrieb einer solchen Notlichtbeleuchtungsanlage, wodurch Daten von einzelnen, zu einzelnen und über einzelne Leuchten einer leuchtenübergreifenden Einheit, wie einer Zentraleinheit, zur Verfügung gestellt werden können.

### Stand der Technik

Viele Aspekte einer Notlichtbeleuchtungsanlage und der von ihr zu verwendenden Technik und Gestaltung werden durch zahlreiche Vorschriften, Normen und Verordnungen in vielen europäischen Staaten vorgegeben und festgelegt. Zu solchen Normen gehören u. a. die
DIN SN-, ÖVE/ÖNORM-, BS-, UNE-EN 50172, EN 62034 und EN 60598-2-22, sowie der Entwurf DIN IEC 62034 und die Vornorm DIN V VDE V 0108, aus denen die Begriffsdefinitionen zu Notlichtbeleuchtungsanlagen und die dazugehörigen funktionellen Festlegungen per Referenzierung als vollinhaltlich in vorliegende Erfindungsbeschreibung aufgenommen gelten. So wird häufig vorgeschrieben, dass die Zentraleinheit der Notlichtbeleuchtungsanlage in einem ersten Brandabschnitt anzuordnen ist, der von den übrigen Brandabschnitten eines Gebäudes getrennt vorhanden ist. Trotz dieser umfassenden Vorschriften und Vorgaben, wie Notlichtbeleuchtungsanlagen in Abhängigkeit des Anwendungsfalls zu gestalten sind, schaffen Hersteller von Anlagen der Notlichtbeleuchtungstechnik zusätzliche Optionen, Möglichkeiten und Individualisierungen durch zusätzliche, sogenannte proprietäre, Funktionen. Solche zusätzlichen Funktionen bestehen u. a. darin, anhand von zahlreichen Parametern wie Spannung, Helligkeit, aufgenommenen elektrischen Strom oder Innentemperatur in der Leuchte, den Zustand der Notlichtbeleuchtungsanlage erheben, überwachen und darstellen zu können.

In der EP 2 081 415 B1 (Patentinhaber: RP-Technik e. K.; Anmeldetag: 09.01.2008) wird ein Visualisierungssystem über einen Web-Browser beschrieben, sodass mit üblichen Web-Browsern auf handelsüblichen Personalcomputern grafisch ansprechend die betrachtete Notlichtbeleuchtungsanlage zusammen mit einer visuellen Darstellung des mit der Notlichtbeleuchtungsanlage ausgestatteten Gebäudes zu sehen ist. Bei solchen Systemen geht es darum, einen möglichst detaillierten und umfassenden Überblick über die gesamte Notlichtbeleuchtungsanlage zur Verfügung zu stellen. Aus diesem Grund werden zahlreiche Messwerte erhoben, wie z. B. der Ausfall einzelner Leuchtmittel, die nicht normungsgemäße Güte der Spannungs- und Stromversorgung sowie der Schaltzustand der Leuchten in einzelnen

Eine Möglichkeit, die Daten von den einzelnen Netzknotenpunkten einer Notlichtbeleuchtungsanlage an ein weiteres Gerät, wie z. B. einen PC, zu übertragen, besteht laut DE 196 11 161 A1 (Anmelderin: AEG EWS Stromversorgungen Sörnewitz GmbH; Anmeldetag: 21.03.1996) darin, die Daten unter Zwischenschaltung eines LON (local operating networks) zu übertragen. Hierbei handelt es sich, wie die DE 196 11 161 A1 ausführt, um ein drahtgebundenes Kommunikationssystem.

Um entsprechend bedarfsgerecht einzelne Leuchten der Notlichtbeleuchtungsanlage ansteuern zu können, z. B. um diese ein- oder auszuschalten, schlägt die EP 1 066 690 A2 (Anmelderin: CEAG Sicherheitstechnik GmbH; Prioritätsdatum: 31.03.1998) vor, individuelle verbraucherspezifische Adressen auf eine modifizierte, zu übertragende Versorgungsspannung der Notlichtbeleuchtungsanlage aufzumodulieren. Aufgrund der immer weiter um sich greifenden Gebäudeautomatisierung werden viele unterschiedliche Informationen auf den Leitungen zu und von den Endstromkreisen eines Gebäudes aufmoduliert, die sich zum Teil gegenseitig beeinflussen, hemmen und stören. Die in der Patentanmeldung EP 1 066 690 A2 vorgeschlagene Lösung steht bei genauerer Betrachtung eigentlich im Widerspruch zu dem, wofür Notlichtbeleuchtungsanlagen geschaffen sind, nämlich zur Steigerung der Zuverlässigkeit und nicht für die Steuerung mit unsicheren Übertragungsverfahren.

Ein Ansatz, von der fehleranfälligen Spannungsmodulation, insbesondere der Spitzenspannungsmodulation, auf den Leitungen der Notlichtbeleuchtungsanlagen wegzukommen, besteht darin, die Datenkommunikation über Funknetze, z. B. über GSM-Telefonnetze, wie in der EP 1 953 893 A2 (Anmelderin: Beghelli S.p.A.; Prioritätstag: 31.01.2007) beschrieben, oder über spezielle Funkfrequenzbänder, wie in der EP 1 724 903 B1 (Patentinhaberin: Beghelli S.p.A.; Prioritätstag: 17.05.2005) und der EP 1 825 448 B1 (Patentinhaberin: Beghelli S.p.A.; Prioritätstag: 10.12.2004) beschrieben, auszuweichen. Die beiden Patentschriften EP 1 724 903 B1 und EP 1 825 448 B1 sprechen von sich aus schon eine erhebliche Schwierigkeit in Funknetzen einer Notlichtbeleuchtungsanlage für die Datenübermittlung der Notlichtbeleuchtungsanlage an, nämlich instabile Verbindungen der besonders entfernt angeordneten Leuchten zu der Zentraleinheit, in der die Daten der verteilt platzierten Leuchten aufgegriffen und verarbeitet werden. Aus diesem Grund schlägt die EP 1 724 903 B1 vor, einen möglichst guten Pfad für die einzelnen Kommunikationsdaten zusammenzusuchen und zusammenzustellen. Wie dies aber vonstattengehen soll, offenbart die EP 1 724 903 B1 nicht. Die einzelnen Funkmodule sollen als Router für die Meldungen von anderen Notlichtleuchten benutzt werden. Aus einer solchen Betrachtung und Lösungsüberlegung spricht ein statisches Verständnis eines Kommunikationsnetzes in einem Gebäude.

Auch aus der US 2007/0 293 208 A1 (Anmelderin: Newict (M) Sdn. Bhd., Bayan Bay (MY), Prioritätstag: 15.06.2006) ist eine Steuerung eines Beleuchtungssystems unter Verwendung drahtloser Kommunikation mittels Radiofrequenzen und Infrarotstrahlung bekannt. Das Konzept wird über modulare Mailboxen realisiert, die über Radiofrequenzen drahtlos kommunizieren. Aus Sicherheitsgründen gegen unautorisierten Zugriff wird ein selektives Anschließen und Trennen von Interfacen von Mailboxen vorgesehen, womit grundsätzlich anders ausgerichtete Sicherheitsanforderungen erfüllt werden sollen.

Drahtlose Technologie zur Funktionskontrolle von Notbeleuchtungen in Gebäuden wird auch gemäß der US 2002/0 080 027 A1 (Anmelder: W. H. Conley III; Anmeldetag: 21.12.2000) verwendet, wobei Kennnummern von zugefügten Leuchten automatisch von einer zentralen Steuereinheit erkannt werden. Eine Übertragung kann mit Zwischenstellen, die als "Repeater" bezeichnet werden, lange Strecken überbrücken.

Tatsächlich sind die elektromagnetischen Bedingungen in einem Gebäude, das mit einer Notlichtbeleuchtungsanlage auszustatten ist, nicht über die gesamte Betriebszeit statisch gleich gut. Größere Notstromaggregate von Notlichtbeleuchtungsanlagen, wie z. B. auch in Krankenhäusern, sind mit Notstromgeneratoren realisiert. Springen die Notstromgeneratoren an, z. B. weil die Batteriespannung der Zwischenspeicher wie Zentralbatterie- oder Gruppenbatterieanlage zu stark absinkt, so ergeben sich in unmittelbarer Nähe der Zentraleinheit der Notlichtanlage, also die Notlichtzentraleinheit, starke elektromagnetische Felder, erzeugt von den Notstromaggregaten. Gerade wenn es auf die zuverlässige Überwachung der Notlichtbeleuchtungsanlage an einem Terminal wie einem Steuerungscomputer ankommt, in dem Zeitpunkt, wenn die Notstromgeneratoren zusätzlich eingreifen müssen, bricht evtl. die Verbindung zu einzelnen Bereichen der Notlichtbeleuchtungsanlage zusammen. In manchen Anwendungsgebieten, z. B. in Kommandozentralen, und in manchen Installationsgebäuden kommt die erschwerende Situation hinzu, dass in einem Notfall gerade die Funk- und Frequenzbelastung rapide ansteigt, weil z. B. eine große Kommunikationsdichte durch viele Pager- und Funkaufrufe an einzelne Personen eintritt.

In Übereinstimmung mit der DIN V VDE V 0108 sind weitere Notlichtbeleuchtungsanlagen bekannt, bei denen die Anlage mit Leuchten aufgebaut ist, die jeweils mit einem eigenen Energiespeicher wie einer Einzelbatterie oder einem Akkumulator ausgestattet sind. Hierbei bestimmt sich die Verfügbarkeit einer entsprechenden Leuchte unter anderem von dem Ladungszustand des Energiespeichers der Leuchte. Fällt eine Leuchte aus, so ist hiermit auch der entsprechende Knotenpunkt in der Kommunikationsstrecke abgeschaltet. Wird der Knotenpunkt für die Aufrechterhaltung der Kommunikation benötigt, so bricht durch einen fehlerhaften Knotenpunkt die gesamte Kommunikation zu Leuchten jenseits des Knotenpunkts zusammen.

Ein Abfangen der Problematik unsicherer Verbindungen aufgrund von architektonischen Besonderheiten und aufgrund der Struktur der Notlichtbeleuchtungsanlage lässt sich z. B. nicht durch eine Übertragungsleistungssteigerung verwirklichen, weil die maximalen erlaubten Sendeleistungen durch Normen und Vorschriften beschränkt sind.

Ähnliche Schwierigkeiten sind z. B. zuvor schon durch die DE 10 2006 015 016 B3 (Patentinhaberin: Fraunhofer-Gesellschaft; Anmeldetag: 31.03.2006) diskutiert worden, die einzelnen Knoten in einem Netzwerk die Funktion eines Knotengruppenkopfes zuordnen will. Mit dem gleichen Ansatz schlägt die US 2008 026 781 A1 (Anmelderin: Thomas & Betts International Inc.; Prioritätstag: 26.07.2006) vor, Knoten in Netzen zu gruppieren. Dadurch werden aber wiederum gewisse Knoten in ihrer Bedeutung hervorgehoben. Solche Systeme werden grundsätzlich unter dem Schlagwort "multi-hop network" zusammengefasst, die Kommunikationsweisen vorschlagen, bei denen verloren gegangene Kommunikationsknoten durch andere Kommunikationsknoten im Netzwerk ersetzt werden sollen. Zur Herstellung der Kommunikation ist z. B. der Vorschlag bekannt, siehe z. B. DE 60 2004 012 094 T2 (Patentinhaberin: Telefonaktiebolaget LM Ericsson; Anmeldetag: 09.12.2004), dass jede Weiterleitungsstation unter Verwendung eines relativen Übertragungsparameters das Signal weitergibt. Hierbei soll der Übertragungsparameter zu jeder Weiterleitungsstation spezifisch zugeordnet sein. Das Herstellen von Kommunikationskanälen in Netzen mit ausfallgefährdeten Knoten kann zudem unter Nutzung eines Beacon-Pakets sicherer gemacht werden (siehe z. B. Promotionsarbeit des Alexander Coers mit der Bezeichnung "Verfahren zur redundanten und distributiven Datenverarbeitung in drahtlosen Sensornetzen", 2005, Universität Duisburg-Essen). Eine andere Überlegung ist der US 2009 201 143 A1 (Anmelderin: SelfLink LLC; Anmeldetag: 30.06.2008) zu entnehmen, die jedes Gerät so gestalten will, dass jedes Gerät jedes andere Gerät über ein Alarmereignis informieren kann. Hierdurch soll ein selbstkonfigurierendes Alarmnetz geschaffen werden. Ähnlich schlägt auch die US 2008 030 319 A1 (Anmelderin: Vulano Group Inc.; Anmeldetag: 13.10.2007) vor, jeden Knoten in einem Netzwerk für Alarmgeräte vorübergehend als Masterknoten anzusehen. Die Anforderungen an Alarmgeräte unterscheiden sich aber grundlegend von den Anforderungen an die Überwachung von Sicherheitsbeleuchtungsanlagen: Alarmgeräte müssen im Gegensatz von Sicherheitsleuchten während einer Überwachungsphase Meldungen zeitnah ausgeben, d. h. in der Regel unterhalb einer Minute, und als Konsequenz auch übertragen, was die möglichen Übertragungsverfahren erheblich einschränkt. Um die zeitnahe Übertragung realisieren zu können, sind Alarmgeräten spezielle Frequenzbänder vorbehalten, die einer Leuchtenüberwachung nicht zur Verfügung stehen.

Ein Blick in Patentliteratur zu Notlichtbeleuchtungsanlagen zeigt gewisse Übertragungen solcher Prinzipien der "multi-hop network"-Kommunikation auf kabellose Kommunikationsstrukturen im Rahmen von Notlichtbeleuchtungsanlagen. Die US 2010 204 847 A1 (Erfinder: Leete et al.; Anmeldetag: 10.02.2009) beschreibt eine Notlichtbeleuchtungsanlage, die mit zwei unterschiedlichen Typen von Knotenpunkten aufgebaut ist, sodass beliebige Kommunikationsprotokolle wie ZigBee, EnOcean oder Wi-Fi übertragen werden können. Auch die US 2009 303 993 A1 (Anmelderin: Smart Warning Systems LLC; Anmeldetag: 05.06.2009) schlägt vor, unterschiedliche Arten von Knoten zu benutzen. In den einzelnen Gebäuden oder Gebäudeabschnitten sollen Gebäudekoordinatoren als Knotenpunkt vorgehalten werden, über die Datenpakete übertragbar sind, in denen sich die Information aus Einzelkomponenten zusammensetzt. Ein Teil des Datenpakets soll den Bestimmungsort des Datenpakets angeben. Ein weiterer Teil des Datenpakets soll die eigentlichen Daten enthalten. Um die Übertragung sicherzustellen, soll das einzelne Datenpaket mehrfach übertragen werden (siehe Abs. [0024] der Beschreibung der US 2009 303 993 A1). Solche Übertragungsverfahren greifen nur bei Netzen, die mit entsprechend geringer Datenübertragungsrate auskommen, d. h., vorrangig bei trägen Netzen.

Ein vernetztes Kontrollsystem für einzelne Lichtquellen eines Beleuchtungssystems wird in der WO 2010/097 738 A1 (Anmelderin: Konin-Klikje Philips Electronics N. V.; Prioritätstage: 26.02.2009, 24.07.2009) beschrieben. Bei der Bestimmung eines Pfads für eine Nachricht durch das Netz sollen fehlerhafte Geräte erkannt und umgangen werden. Es erfolgt jeweils eine Überprüfung der Funktionsfähigkeit der Übertragungsverbindung zwischen zwei Geräten auf einem als Vektor vorbestimmten Pfad. Die Umgehung wird nach Auswahlregeln bestimmt.

Aus der US 6 754 602 B1 (Inhaberin: International Valvue Company; Anmeldetag: 07.09.2001) ist ein Notbeleuchtungssystem für Flugzeuge bekannt. Das System ermittelt drahtlos Status und Fehlfunktionen von Komponenten wie Notbeleuchtungslampeneinheiten. Die Anlage umfasst sogenannte Control-Module, die untereinander drahtlos kommunizieren und Rohdaten abspeichern sowie mit einem Computer kommunizieren können, der die Daten verarbeitet. Ein Sicherheitsaspekt wird durch redundantes Vorhalten von mehreren Komponenten verwirklicht, so dass für den möglichen Ausfall eines Control-Moduls noch ein zweites Control-Modul im Sende- und Empfangsbereich angeordnet sein soll, wobei als Rohdaten die Daten von allen in diesem Bereich liegenden Leuchten gelten und weitere Daten nur summarisch gespeichert gesendet und ausgewertet werden.

### Aufgabenstellung

Es besteht Bedarf nach einem Kommunikationssystem für Notlichtbeleuchtungsanlagen, das so zuverlässig die Kommunikation zwischen einzelnen Notlichtleuchten und zwischen Notlichtleuchten und einer leuchtenübergreifenden Einheit aufrechterhalten kann, dass zu und von dieser leuchtenübergreifenden Einheit, wie z. B. einer Zentraleinheit, die häufig in einem besonderen Brandabschnitt steht, z. B. in einer eigens gegossenen Betonwanne mit Bewehrung, ein nahezu permanent vorhandener Kommunikationskanal, z. B. mit einer Verfügbarkeit von mehr als 90 %, hergestellt werden kann.

### Erfindungsbeschreibung

Die erfindungsgemäße Aufgabe wird durch eine Notlichtbeleuchtungsanlage nach Anspruch 1 gelöst, ein geeignetes Betriebsverfahren lässt sich Anspruch 18 entnehmen. Vorteilhafte Weiterbildungen lassen sich den abhängigen Ansprüchen entnehmen.

Notlichtbeleuchtungsanlagen werden in Gebäuden und anderen Bauwerken mit einem gewissen öffentlichen Charakter so wie in - aus einschlägigen Normen als mit einer Anlage zu versehende - Arbeitsstätten eingebaut, damit in einem Notfall oder bei einem zusammengebrochenen Versorgungsnetz der Stromversorgung bzw. der Netzspannungsversorgung eine ausreichende Beleuchtung über einen gewissen Zeitraum, z. B. über wenigstens eine Stunde oder sogar über wenigstens drei Stunden, sichergestellt ist. Hierbei ist es vorteilhaft, wenn die einzelnen Leuchten der Notlichtbeleuchtungsanlage, häufig setzen sich Notlichtbeleuchtungsanlagen aus Leuchten unterschiedlichen Typs wie z. B. Sicherheitsleuchten und Rettungszeichenleuchten zusammen, zentral auf Funktionstüchtigkeit überwacht werden können. Ist eine zentrale Überwachungsmöglichkeit nicht gegeben, so wird normungsgemäß häufig gefordert, dass in regelmäßigen Abständen eine Begehung des gesamten Gebäudes stattzufinden hat, um die Funktionstüchtigkeit der Leuchten einzeln zu überprüfen und nachzuweisen. Eine zentrale Überwachungsmöglichkeit kann z. B. durch eine Pluralität datenvernetzter leuchtenübergreifender Einheiten realisiert sein. Durch Datenaustausch zwischen den Einheiten ist der jeweils in einer Einheit vermerkte Datensatz aktuell. Kontrollabfragen und Steuereingriffe können an jeder leuchtenübergreifenden Einheit vorgenommen werden. In der Notlichtbeleuchtungsanlage sind leuchtenübergreifende Einheiten Kommunikationsknoten, welche Überwachungsdaten, insbesondere von Leuchten der Notlichtbeleuchtungsanlage, aufnehmen. Durch die Anbindung einer leuchtenübergreifenden Einheit, wie einem Überwachungsmodul, in einer Zentraleinheit einer Notlichtbeleuchtungsanlage verringert sich der regelmäßig auftretende Bearbeitungsaufwand, sofern die Datenkommunikation zu und von dem Überwachungsmodul als ausreichend sicher angesehen werden kann. Findet eine permanente Leuchtenüberwachung statt, so steigert dies nicht nur den Bedienungskomfort der Notlichtbeleuchtungsanlage, sondern trägt zur Erhöhung der Betriebssicherheit der Notlichtbeleuchtungsanlage bei. Die Notlichtbeleuchtungsanlage ist vorzugsweise so aufgebaut, dass sie unabhängig von der leuchtübergreifenden Einheit die von den eingangs genannten Normen erhobenen Anforderungen erfüllt. Dies wird dadurch erfüllt, dass beispielsweise für eine leuchtenübergreifende Einheit zur Leuchtenüberwachung aus der Leuchte nur Messwerte erhoben werden; soll zudem ein Wechsel in den Betriebszuständen erfolgen, erfolgt dieser reversibel und wird bei einer Nichtverfügbarkeit der Kommunikation zur leuchtenübergreifenden Einheit rückgängig gemacht.

Notlichtbeleuchtungsanlagen werden in der Regel in solchen Gebäuden und Bauwerken verbaut, in denen die Notlichtbeleuchtungsanlage viele Quadratmeter Nutzfläche und Fluchtwege abdeckt (üblich ist mehr als 200 qm, tatsächlich häufig mehr als 1000 qm). Um in solchen mehrere hundert Quadratmeter, häufig sogar mehrere tausend Quadratmeter, umfassenden Gebäudeteilen eine ausreichende Beleuchtung auch in einem Notfall sicherzustellen, wird eine größere Anzahl Leuchten, man kann davon ausgehen, dass wenigstens drei Leuchten vorhanden sind, über das Gebäude in den Bereichen verteilt, in denen Fluchtwege entlang geführt sind. Um die Daten der Leuchten weiter zu und von einer Steuereinheit wie einer Zentraleinheit transportieren zu können, gibt es eine gewisse Anzahl an Hochfrequenzkommunikationsmodulen, die ebenfalls Teil der Notlichtbeleuchtungsanlage sind. Als Hochfrequenzkommunikationsmodule werden solche Einheiten bezeichnet, die eine Kommunikation in einem Frequenzband oberhalb einer Mindestfrequenz wie 140 kHz, vorzugsweise im Megaherzbereich oder im einstelligen Gigaherzbereich, durchführen. Es umfasst jede Leuchte ein Hochfrequenzkommunikationsmodul, das in der Leuchte integriert ist. Eine erste Leuchte kann einem ersten Hochfrequenzkommunikationsmodul zugeordnet sein. Auch eine zweite Leuchte kann mit dem ersten, alternativ mit einem zweiten Hochfrequenzkommunikationsmodul verbunden sein. Mit anderen Worten, es ist jeweils ein Hochfrequenzkommunikationsmodul zur Schaffung eines Kommunikationsknotens in jeweils einer Leuchte integriert. Auch in einer leuchtenübergreifenden Einheit bzw. in einer Zentraleinheit ist ein Hochfrequenzkommunikationsmodul integriert.

Weiterhin gehört zu einer Notlichtbeleuchtungsanlage wenigstens eine leuchtenübergreifende Einheit, über die Überwachungs- und, optional, Steuerungsaufgaben abgewickelt bzw. durchgeführt werden können. Leuchtenübergreifende Einheiten akkumulieren die von verschiedenen Leuchten zugeführten Daten und können Steuerfunktionen ausführen. Die zu erhebenden Daten und die dafür zu verwendenden Zeitintervalle ergeben sich aus den eingangs genannten Normen für "Automatische Prüfsysteme", weil hierunter eventuell auch Leuchtenüberwachungen zu verstehen sind. Beispielsweise können Energieflüsse von Bereitschaftssystemen bzw. integrierten Energieversorgungen, wie z. B. von elektrochemischen oder pseudokapazitiven Energiespeichern, zu den Leuchten geschaltet und/oder der Energiefluss zu den Leuchten geregelt werden. Steuerbefehle werden zu den Leuchten oder zu den Bereitschaftssystemen übermittelt. Komplexe Notlichtbeleuchtungsanlagen umfassen häufig mindestens eine Zentraleinheit, die jeweils für einen bestimmten bzw. begrenzten Teil der Notlichtbeleuchtungsanlage zuständig ist. Zentraleinheiten können mit Leuchten insbesondere mittels leuchtenübergreifender Einheiten kommunizieren. Die Zentraleinheit steuert häufig Energieflüsse von einem zentralen Versorgungskabel oder von einer alternativen Energieversorgungsquelle, wie z. B. von Notstromakkumulatoren oder von Notstromgeneratoren. In der Zentraleinheit werden vorzugsweise Rechnerkomponenten mit Speichern untergebracht, die zusätzlich Funktionen der Notlichtbeleuchtungsanlage durch eine Vor-Ort-Programmierung realisieren und anpassen können. Die Rechnerkomponenten können z. B. die Funktionstüchtigkeit einzelner Leuchten archivieren und die Überwachungszyklen und Überwachungshäufigkeiten nachweisen, indem in einem nicht veränderlichen Speicher die Überwachungen der Notlichtbeleuchtungsanlage abgelegt und gespeichert werden. Tritt ein Notfall auf, eventuell sogar mit Personenschaden, so lässt sich in der Zentraleinheit der Ablauf und der Zeitpunkt einzelner Leuchtenausfälle nachträglich nachvollziehen. Staatsanwaltliche Ermittlungen werden so erleichtert. Damit die Zentraleinheit aber im Notfall nicht geschädigt wird, wird die Zentraleinheit häufig in einem für sie eigens vorgesehenen Brandabschnitt installiert. Dieser Brandabschnitt wird in vielen Fällen sogar besonders gegen Feuer und thermische Einwirkungen geschützt. Viele Architekten von Gebäuden mit Notlichtbeleuchtungsanlagen sehen hierfür speziell gestaltete Betonwannen mit besonderer Armierung vor. Jede Zu- und Ableitung von und in die Zentraleinheit stellt eine Schwächung und eine Risikoerhöhung für die Brandsicherheit dar. Eine hochfrequente Kommunikationsübertragung an die Zentraleinheit reduziert die Notwendigkeit der Eingriffe und Durchbrüche durch Brandschutzwände.

Es ist vorteilhaft, wenn zu einem Hochfrequenzkommunikationsmodul eine Übertragungsbaugruppe gehört. Eine Übertragungsbaugruppe ist so gestaltet, dass sie Daten, die zu einer ersten Leuchte gehören, und Daten, die zu einer zweiten Leuchte gehören, in einem Gesamtdatensatz übertragen kann. Die Daten werden also verheiratet. Die Daten werden zu einem Überwachungstupel zusammengebunden.

Ein Tupel, das auch als n-Tupel bezeichnet werden kann, enthält eine Sammlung von "n" Attributen. Dabei ist "n" eine nach den Erfordernissen der Notlichtbeleuchtungsanlage, wie der Größe einer Notlichtbeleuchtungsanlage, wie der Anzahl der Leuchten in der Notlichtbeleuchtungsanlage und insbesondere wie der Anzahl von Überwachungsdaten und Steuerdaten, bestimmte natürliche Zahl. Diese Zahl kann bei einer Erweiterung der Notlichtbeleuchtungsanlage oder einer Vergrößerung der Anzahl von Überwachungsdaten erhöht werden. Ergeben sich Probleme bei der Übertragung eines Überwachungstupels oder wird die Notlichtbeleuchtungsanlage in einer Restrukturierung verkleinert, ist eine entsprechende Verringerung der Anzahl "n" von Komponenten des Tupels möglich. Auch ein eindimensionales Array von Zahlen, wie ein Vektor, kann als Tupel verwendet werden oder Teile des Tupels bilden. Die so zusammengestellten Daten werden als Überwachungstupel bezeichnet.

Für eine Überwachungsfunktion erforderliche Attribute einer Notlichtbeleuchtungsanlage werden als Zahlenwerte in die Komponenten eines Überwachungstupels aufgenommen. Es entspricht also in einer Ausgestaltung eine i-te Komponente eines Tupels einem Attribut, wie die Betriebszeit oder wie der Ladungszustand eines Akkumulators oder die Funktionstüchtigkeit des Leuchtmittels und ggf. dessen elektronisches Betriebs- oder Vorschaltgerät. Vorzugsweise ist die Reihenfolge der Attribute im Tupel festgelegt. Damit können Attribute insbesondere dimensionslos als Daten codiert und übertragen werden. Empfangene Daten werden unter Zuhilfenahme der Hochfrequenzkommunikationsmodule weiter mit Algorithmen analysiert bzw. ausgewertet. Die empfangenen Daten werden nach Erfordernis des Hochfrequenzkommunikationsmoduls oder der Leuchte modifiziert bzw. ergänzt. Anschließend kann das Hochfrequenzkommunikationsmodul den Überwachungstupel weiter übertragen. Empfangene Daten können decodiert und als Attribute einzelnen Elementen der Notlichtbeleuchtungsanlage bzw. einzelnen Bauteilen zugeordnet werden. Zur Steigerung der Sicherheit können in der Codierung der Daten in einem Überwachungstupel Codierungsalgorithmen verwendet werden. In einer solchen Ausgestaltung werden während der Codierung der Überwachungstupel beispielsweise Synchronisationsinformationen ergänzt oder auch Fehlerschutzalgorithmen wie z. B. CRC (cyclic redundancy check) zur Erkennung von Übertragungsfehlern verwendet. Ebenso können die Daten, die Informationen zu unterschiedlichen Bauteilen der Notlichtbeleuchtungsanlage abbilden, auch komprimiert zusammengefasst werden oder die Überwachungstupel peu ä peu übertragen werden. Überwachungsdaten einer ersten Leuchte und Überwachungsdaten mindestens einer zweiten Leuchte werden in einem Überwachungstupel zusammengefasst. Überwachungsdaten für ein Überwachungstupel umfassen nach einem Aspekt leuchtenspezifische Messwerte, insbesondere solche Messwerte, die einen aktuellen Betriebszustand der Leuchte wiedergeben. Daten werden als Datensätze übertragen. Ein Übertragungstupel kann auch mit unveränderten Daten weitergeleitet werden. Ein übertragenes Tupel, z. B. wenn es zwischengespeichert ist, liegt in einem Hochfrequenzübertragungsmodul vor, wobei in diesem nicht ein vollständiges Abbild der empfangenen Daten abgelegt sein muss, sondern auch eine verkürzte Speicherung vorteilhaft sein kann, bspw. muss weder eine Validitätsergänzung noch ein Aktualitätsstempel nach einer bestätigend ausgefallenen Prüfung beibehalten werden. Überwachungsdaten der ersten Leuchte und Überwachungsdaten von zweiten Leuchten und optional weitere Überwachungs- bzw. Steuerungsdaten werden nach Übertragung als ein Tupel in einer leuchtenübergreifenden Einheit oder in einer Zentraleinheit weiter verarbeitet bzw. analysiert. In der Zentraleinheit kann die Größe eines Tupels der Notlichtbeleuchtungsanlage festgelegt oder bei Erweiterung der Anlage z. B. durch einen Initialisierungsbefehl vergrößert werden. Auch eine Verkleinerung eines Tupels ist in der Zentraleinheit über eine Initialisierung möglich. Mit anderen Worten, es ist vorteilhaft, wenn ein Überwachungstupel Überwachungsdaten von einer Gruppe von Leuchten umfasst.

Jedes Hochfrequenzkommunikationsmodul überträgt nicht nur die an sie unmittelbar angebundenen Daten, insbesondere der das Hochfrequenzkommunikationsmodul tragenden Leuchte, sondern Daten von anderen Datenquellen der Notlichtbeleuchtungsanlage wie anderen Leuchten gleichzeitig, d. h. im gleichen Datensatz, mit. In einer Ausgestaltung der Notlichtbeleuchtungsanlage beinhaltet ein Datensatz Steuerdaten, insbesondere Schaltdaten und/oder Überwachungsdaten. Solche Daten können eine Akkumulatorspannung, ein Akkumulatorladungszustand, eine Leuchtmittelfunktion und insbesondere das Ergebnis eines Funktions- oder Betriebsdauertests einzelner Leuchten und/oder der mindestens einen leuchtenübergreifenden Einheit und/oder der Zentraleinheit sein, die von bzw. zu der leuchtenübergreifenden Einheit bzw. der Zentraleinheit gesendet werden.

Sendet eine Leuchte Daten, die für eine Zentraleinheit oder eine leuchtenübergreifende Einheit bestimmt sind, so führt sie diese aus eigenen Daten und/oder aus Daten von mehreren empfangenen Überwachungstupeln zusammen. Die Leuchte mit ihrem Hochfrequenzkommunikationsmodul gilt als Kombinierer eigener Daten und aufgefangener Fremddaten von anderen Leuchten. Je mehr Fremddaten aufgefangen werden, desto umfassender wird das Überwachungstupel. So kann bei einer sehr guten Verbindung, das bedeutet, wenn die Verbindung zwischen allen Hochfrequenzkommunikationsmodulen gegeben ist, in einem einzigen Überwachungstupel die gesamte Notlichtbeleuchtungsanlage im Hinblick auf zumindest einen Parameter, wie zum Beispiel der Information, welche Leuchten eingeschaltet sind, übertragen werden.

Ein so gebildetes Überwachungstupel gelangt zu einer leuchtenübergreifenden Einheit, genauer an ein Hochfrequenzkommunikationsmodul der leuchtenübergreifenden Einheit. In der leuchtenübergreifenden Einheit können die Überwachungsdaten aufbereitet, umgestellt, weiter übertragen, angezeigt, gespeichert, insbesondere über Intranet oder Internet an eine Gebäudeleittechnik weitergeleitet und/oder ausgewertet werden.

Jedes Hochfrequenzkommunikationsmodul arbeitet als Datengateway für die zugeordnete Leuchte und für die Daten der Leuchten, die zuvor übertragen wurden. Die Übertragung erfolgt nicht über einen bestimmten Pfad, sondern pfadmäßig unbestimmt. Jedes Hochfrequenzkommunikationsmodul gilt als gleichberechtigt zu den anderen Hochfrequenzkommunikationsmodulen. Das absendende Hochfrequenzkommunikationsmodul kümmert sich nicht darum, ob andere Hochfrequenzkommunikationsmodule seine Daten erneut im Anschluss an das Versenden ebenfalls versenden. In einem Zeitraum, insbesondere außerhalb der Sendezeiten, ist das Hochfrequenzkommunikationsmodul empfangsbereit für einen Datenempfang. Bei Datenempfang wird ein Tupel von Daten, wie ein Überwachungstupel oder ein Übertragungstupel, d. h. ein lediglich übertragenes Überwachungstupel, im Hochfrequenzkommunikationsmodul registriert und in einem Zwischenspeicher abgelegt. Wird in einem Zeitraum eine Pluralität von Überwachungstupeln empfangen, so werden die Überwachungstupel vorzugsweise vereinzelt zwischengespeichert. Somit findet eine mehrfache Übertragung der Daten einer Leuchte durch mehrere Hochfrequenzkommunikationsmodule mit Daten aus wenigstens einer anderen Leuchte statt. In diesen mehrfachen Kommunikationsaufbau geht die Überlegung ein, dass bei einer Übertragung der Daten über mehrere Kommunikationspfade, d. h. über mehrere unterschiedliche Hochfrequenzkommunikationsmodule, die Wahrscheinlichkeit gesteigert wird, dass über wenigstens einen Kommunikationspfad eine Verbindung bis zu der Zentraleinheit oder bis zu der leuchtenübergreifenden Einheit, insbesondere in ihrer Überwachungsfunktion, möglich ist bzw. tatsächlich stattfindet.

Das Datenübermittlungsverfahren greift auf mehrere Hochfrequenzkommunikationsmodule zurück. Jedes Hochfrequenzkommunikationsmodul überträgt einen Überwachungstupel. Fällt ein Hochfrequenzkommunikationsmodul zeitweilig aus oder ist dessen Überwachungstupel im Bereich der Zentraleinheit nicht empfangbar, so sind die Überwachungstupel der anderen Hochfrequenzkommunikationsmodule eventuell lückenhaft in Bezug auf einzelne Daten, es kommen aber zumindest immer noch (lückenhafte) Überwachungstupel z. B. in der Zentraleinheit an.

Die Komponenten, die teilweise auch als Attribute zu bezeichnen sind, der empfangenen Überwachungstupel werden in einer Kontrolleinheit des Hochfrequenzkommunikationsmoduls analysiert. In dem Hochfrequenzkommunikationsmodul, vorzugsweise in der Kontrolleinheit, ist eine Aktualitätsreferenz, wie ein Aktualitätsstempel, vorhanden. Diese wird zum Filtern empfangener Überwachungstupel verwendet. Es kann sich herausstellen, dass ein Überwachungstupel unvollständig ist. Ein Überwachungstupel kann ungültige Daten oder beschädigte Daten aufweisen, welche in einer Analyse als negative Überwachungsdaten erkannt werden, weil deren Information nicht zur Überwachung nutzbar ist. In der Regel handelt es sich bei der überwiegenden Zahl von Komponenten im Datenbestand eines Überwachungstupels um positive Überwachungsdaten mit gültiger Überwachungsinformation. Unter Zuhilfenahme von Validitätsergänzungen kann in einer Kontrolleinheit bestimmt werden, ob einzelne Daten eines Überwachungstupels als positive (verwertbare) oder als negative (nicht zu berücksichtigende) Daten zu qualifizieren sind. Aufgrund der Ausbreitung der Komponenten der Überwachungstupel über verschiedene Pfade wird ein lückenhaftes Überwachungstupel eines ersten Pfades, das bspw. eine fehlerhafte Komponente aufweist, mit einer entsprechenden Komponente aus positiven Überwachungsdaten mindestens eines zweiten Überwachungstupels repariert. Eine Verbesserung eines fehlerhaften oder unvollständigen Überwachungstupels kann in einem Hochfrequenzkommunikationsmodul einer Leuchte oder in einem leuchtenübergreifenden Element oder in einer Zentraleinheit erfolgen. Das mit validen Daten fehlerbefreite bzw. das mit neuen Überwachungsdaten aus einer an das Hochfrequenzkommunikationsmodul angeschlossenen Leuchte aktualisierte Überwachungstupel wird von dem Hochfrequenzkommunikationsmodul innerhalb eines Zeitraums versendet. Der Zeitraum zum Aussenden des Überwachungstupels ist kürzer als der Zeitraum, in dem das Hochfrequenzkommunikationsmodul für den Empfang von Überwachungstupeln aus zweiten Hochfrequenzkommunikationsmodulen bereit steht, um die Wahrscheinlichkeit zeitlich überlappend versendeter Überwachungsdaten und den daraus resultierenden Kollisionen gering zu halten. Es erfolgt ein Datenaustausch mittels Überwachungstupel zwischen Hochfrequenzkommunikationsmodulen.

In nahezu gleicher Weise können mit dem Hochfrequenzkommunikationsmodul Steuerdaten aus einer Zentralanlage oder aus einer leuchtenübergreifenden Einheit den einzelnen Leuchten zugeführt werden. Eine erste Leuchte kann Steuerdaten einer zweiten Leuchte auch über mindestens ein zwischengeschaltetes Hochfrequenzkommunikationsmodul zukommen lassen. Steuerdaten sind bspw. eine Aktualitätsreferenz, eine Initiierung von Funktions- oder Dauerprüfungen nach EN 62034 oder ein Ein- oder Ausschalten von allen oder bestimmten einzelnen Leuchten oder Gruppe von Leuchten in Gefahrensituationen bzw. Betriebsruhezeiten.

Nachfolgend werden vorteilhafte Ausgestaltungen und Weiterbildungen dargelegt, die für sich gesehen, sowohl einzeln aus auch in Kombination, ebenfalls erfinderische Aspekte offenbaren können.

Vorteilhaft ist es, wenn die Notlichtbeleuchtungsanlage mindestens eine Energiequelle für die Versorgung der Leuchten in einem Notfall bzw. bei einer unterbrochenen Energieversorgung über die Netzspannungsversorgung hat. Es gibt in der Notlichtbeleuchtungsanlage eine integrierte Energieversorgung. Solche integrierten Energieversorgungen können eine Zentralbatterieanlage, eine Gruppenbatterieanlage oder auch mehrere vorhandene Akkumulatoren sein. Die Akkumulatoren können an verschiedenen Stellen der Notlichtbeleuchtungsanlage vorhanden sein. Mit mehreren, über die Notlichtbeleuchtungsanlage verteilten Akkumulatoren kann eine dezentrale Energieversorgung sichergestellt werden. Die Energiequellen stellen Energie für eine leitungsgebundene Energieversorgung der Leuchten, genauer der Leuchtmittel und ggf. deren elektronischen Betriebsgerät in den Leuchten zur Verfügung. Es wird die Funktion der Leuchtmittel insbesondere durch eine überwachte Energieversorgung sichergestellt. Wenn eine Netzspannungsversorgung Mindestgütegrenzen unterschreitet (hierzu kann die Notlichtbeleuchtungsanlage mit einem oder mehreren Spannungswächtern ausgestattet sein), so setzen die Energiequellen ein. Mindestgütegrenzen können z. B. Spannungswerte in der Notlichtbeleuchtungsanlage sein. Solche Spannungswerte können sich an zu erwartenden Scheitel- oder Effektivwerten orientieren. Ein leicht zu überprüfender Scheitelwert, der als einzuhaltender Scheitelwert der Spannung anzusehen ist, ist ein Wert von 60 % oder 85 % (im Vergleich zum Nennscheitelwert, der bei einer typischen 230 V Versorgungsspannung 325 V beträgt). Die Energiequellen stellen die Versorgung von Leuchtmitteln der Leuchten sicher, wenn die Mindestgütegrenzen nicht mehr eingehalten werden. Weitere geeignete Mindestgütegrenzen können aus dem Effektivwert der Spannung abgeleitet werden.

Die Notlichtbeleuchtungsanlage kann die Datenkommunikationsfähigkeiten erweitern, wenn Repeater verwendet werden. Für eine Datenkommunikation umfasst eine Notlichtbeleuchtungsanlage, wenn sie über längere Strecken eine Kommunikation zur Verfügung stellen soll, wenigstens einen Repeater mit einem Hochfrequenzkommunikationsmodul. Die Repeater arbeiten vorzugsweise ähnlich wie die Hochfrequenzkommunikationsmodule. Die Repeater umfassen aber keine Leuchten. Somit ist die Aufgabe der Repeater, die Überwachungstupel erneut zu versenden. In einer Ausgestaltung verstärkt ein Repeater ein Signal eines Übertragungstupels, welches abgeklungen ist, sodass ein Verlust eines Überwachungstupels auf einer Wegstrecke bspw. durch Überlagerung eines Störsignals nicht mehr droht. In einer weiteren Ausgestaltung arbeitet der Repeater als mehrfach Wiederholer des empfangenen Signals. Die Repeater arbeiten als Relais-Stationen. Die Repeater tragen mit dazu bei, die Kommunikationspfade zu verbessern.

Die Notlichtbeleuchtungsanlage sollte nur mit Überwachungsdaten arbeiten, die tatsächlich ausreichend aktuell sind. Vorteilhafter Weise ist in einer Notlichtbeleuchtungsanlage ein Aktualitätsstempel vorhanden. Die Überwachungsdaten können hierfür mit einem Aktualitätsstempel, insbesondere einem dem Aktualitätsstempel eines Hochfrequenzkommunikationsmoduls entsprechenden Marker, ausgestattet sein. Jedes Hochfrequenzkommunikationsmodul kann mit einem Zwischenspeicher ausgestattet sein. In dem Zwischenspeicher lässt sich ein Aktualitätsstempel ablegen. Der Zwischenspeicher nimmt den Aktualitätsstempel auf. Anhand des Aktualitätsstempels wird geprüft, ob der Datensatz, der mit einem Aktualitätsstempel versehen ist, noch für Weiterverarbeitungen zu verwenden ist. Mit Hilfe des Aktualitätsstempels kann beurteilt werden, ob der durch den Aktualitätsstempel bezeichnete und zugehörige Datensatz einbindbar ist. Wenn er einbindbar ist, kann er in das Überwachungstupel integriert werden.

Zur Steigerung der Sicherheit kann zusätzlich noch eine Validitätsergänzung angefügt werden. Ein Überwachungstupel setzt sich so aus mehreren Datensatzteilen zusammen. Zu einem Überwachungstupel gehören ein Aktualitätsstempel, wenn vorzugsweise nur ausreichend aktuelle Datensätze in der Notlichtbeleuchtungsanlage vorhanden sein sollen, vorteilhafterweise gehören zusätzlich eine Validitätsergänzung und die einzelnen Daten, die Leuchten zuordenbar sind, zu einem Datensatz. Ein solcher Datensatz kann eine Komponente eines Überwachungstupels bilden. Eine jede Komponente eines Überwachungstupels kann einen Aktualitätsstempel umfassen. Eine Validitätsergänzung erfasst auch die Validität eines Aktualitätsstempels als Teil des Überwachungstupels. Allerdings ist Validität eines Aktualitätsstempels weiterhin im Vergleich mit anderen Aktualitätsstempeln oder im Vergleich mit einer Aktualitätsreferenz zu prüfen. Mindestens eine Komponente eines Überwachungstupels kann eine Adresse, wie eine Gerätenummer eines Hochfrequenzkommunikationsmoduls, umfassen. Die Überwachungstupel beinhalten dann Paare bestehend aus Adressinformationen und den zu der Adresse gehörenden Überwachungsergebnisse. Eine Komponentenadresse kann auch über den Index einer Komponente "i" des Überwachungstupels kodiert und damit eindeutig z. B. einer Leuchte zuordenbar sein. In einer Anordnung, die eine "i"-te Komponentenadresse in einer Komponente "i" führt, welche zudem mit einer Validitätsergänzung abgesichert ist, ist es möglich, die Überwachungssicherheit des Datenübermittlungsverfahrens weiter zu erhöhen. Die Zuordnung einer Struktur eines Überwachungstupels zu einer Leuchtenanordnung bzw. einer Anordnung von Hochfrequenzkommunikationsmodulen einer Notlichtbeleuchtungsanlage wird bei einer Initialisierung festgelegt. Über eine Initialisierung wird ein Hochfrequenzkommunikationsmodul in eine Notlichtbeleuchtungsanlage eingebunden indem beispielsweise sämtliche Gerätenummern erfasst werden, der i-ten Gerätenummer die i-te Position in dem Überwachungstupel zugeordnet wird und diese Zuordnung dem Hochfrequenzkommunikationsmodul mit der i-ten Gerätenummer mitgeteilt wird. In der Notlichtbeleuchtungsanlage können Strukturänderungen, wie der Austausch von Komponenten, eine Vergrößerung der Anlage oder eine Verkleinerung der Anlage, automatisch erkannt und die Überwachungstupel entsprechend angepasst werden. Somit lassen sich eine Zeit, in der ein Hochfrequenzkommunikationsmodul im Sendemodus ist, und ein Platz für einen Zwischenspeicher, den ein oder mehrere Überwachungstupel erfordern, reduzieren. Zudem wird auch die Übertragungszeit für ein Überwachungstupel und damit die Kollisionswahrscheinlichkeit reduziert, es kann auch die Übertragungshäufigkeit erhöht werden.

Beides trägt zur Verbesserung der Übertragungswahrscheinlichkeit bei.

Der Aktualitätsstempel lässt sich besonders einfach und zugleich aber auch zuverlässig realisieren, wenn ein Tourenzähler oder ein Modulo-Zähler verwendet wird. Der Aktualitätsstempel kann einen einzelnen Datensatz mit einem Wert signieren. Der Aktualitätsstempel arbeitet in einer Ausgestaltung mit ansteigenden Werten. Der im Wert ansteigende Aktualitätsstempel erhöht sich während eines endlichen Zeitraums. Das bedeutet, der Aktualitätsstempel ist innerhalb eines abgeschlossenen Zeitraums als Orientierungswert oder als Signatur vorhanden. Der Aktualitätsstempel arbeitet mit variierenden Werten. Der Aktualitätsstempel kann nach einer Zeit wieder absinken, also mit sich kontinuierlich verringernden Werten arbeiten. In einer weiteren Ausgestaltung kann der Aktualitätsstempel immer wieder mit einem niedrigen Wert starten, hierbei anschließend ansteigend hochzählen. Der Tourenzähler zählt also in einem Rundensystem und ordnet so Aktualitätssignierungen den einzelnen Datensätzen bzw. Überwachungstupeln zu. Hierbei ist das Zeitintervall einer Runde des Rundensystems so groß gewählt, dass sichergestellt ist, dass sich die Aktualitätsstempel aller Halbfrequenzkommunikationsmodule in einem kleinen Abschnitt, wie einem Drittel, des Wertebereichs der Runde befinden. Mit Hilfe des Aktualitätsstempels können Datensätze und Überwachungstupel ausgefiltert werden bzw. von den Kommunikationskanälen heruntergenommen werden.

Es ist vorteilhaft, wenn die Notlichtbeleuchtungsanlage mit solchen Hochfrequenzkommunikationsmodulen aufgebaut ist, die Zwischenspeicher aufweisen. Die Überwachungsdaten können in einem Hochfrequenzkommunikationsmodul mit Zwischenspeicher zumindest teilweise oder zeitweise in dem Zwischenspeicher abgelegt werden. Die Überwachungsdaten des Zwischenspeichers können anschließend zeitversetzt, vorzugsweise dabei mehrfach wiederholt versendet werden, also zu verschiedenen Zeitpunkten bzw. verzögert und mehrfach. Dies steigert die Wahrscheinlichkeit des vollständigen Datenzugangs in der leuchtenübergreifenden Leuchtenüberwachung.

Die Notlichtbeleuchtungsanlage verbessert die Verfügbarkeit ihrer Datensätze und Überwachungstupel, wenn eine Codierung derart gewählt wird, dass - in einem gewissen Rahmen - Eigenkorrekturen der empfangenen Datensätze und Überwachungstupel möglich sind. Mit Hilfe eines Bewertungsgliedes in einer Kontrolleinheit kann der empfangene Datensatz auf Konsistenz und Fehlerfreiheit ausgewertet werden, ggf. können sogar Fehler behoben werden. Besonders vorteilhaft sind Fehlerkorrekturen mit einem linearen fehlerkorrigierenden Bitcode, also einem Code, der auf Basis einzelner Bits die Fehlerhaftigkeit des Datensatzes oder des Überwachungstupels nicht nur identifiziert, sondern sogar korrigiert. Hierbei sind Codes wie der Hamming-Code hilfreich, die einen Abstand von drei oder mehr aufweisen. So wird bei einem Hamming-Code üblicherweise von einem Hamming-Abstand von drei gesprochen. Die Fehlerkorrektur kann sowohl in den einzelnen Hochfrequenzkommunikationsmodulen, in den Übertragungsbaugruppen, in der Zentraleinheit als auch in den Leuchten erfolgen. Werden Fehlerkorrekturen in den einzelnen Leuchten durchgeführt, werden fehlerbehaftete Datensätze und Überwachungstupel frühzeitig vermieden. Die Häufigkeit fehlerhafter Datensätze in der Zentraleinheit ist reduziert. Die Validität kann auch signaltechnisch festgestellt werden, z. B. indem Empfangspegel gemessen werden. Mit Prüfsummen lässt sich auch sehr gut hantieren.

Es ist vorteilhaft, eine bitvektorartige Betrachtung der Überwachungstupel durchzuführen. Überwachungsdaten einer ersten Leuchte und/oder Überwachungsdaten einer zweiten Leuchte können über ein Hochfrequenzkommunikationsmodul weitergeleitet werden. Die in einem Überwachungstupel zusammengefassten Überwachungsdaten gelangen zu mindestens einer leuchtenübergreifenden Einheit. Überwachungsdaten einer ersten Leuchte können mit einem Überwachungstupel zu einem aktualisierten Überwachungstupel verbunden werden. Bei der Datenzusammenführung in einem Überwachungstupel bspw. auch mit Daten eines zweiten Überwachungstupels wird oft auf logische Oder-Verknüpfungen als Verbindungsglieder zur Herstellung des Überwachungstupels zurückgegriffen. In dieser Ausgestaltung der Überwachungstupel verheiraten die logischen Oder-Verknüpfungen die Überwachungsdaten einer ersten Leuchte mit den empfangenen Überwachungsdaten anderer Leuchten zu einem aufbereiteten Überwachungstupel, wobei valide, aktuelle und positive Testresultate mit einer logischen "1", alle anderen mit einer logischen "0" kodiert sind. Durch eine solche Kombination gehen keine validen, aktuellen und positiven Daten verloren. Die Oder-Verbindungsglieder können in den Hochfrequenzkommunikationsmodulen physisch, d. h. hartverdrahtet, oder softwaremäßig vorhanden sein. Hierdurch werden ortsnah unmittelbar nach dem Empfang von Datensätzen und Überwachungsdaten von anderen Leuchten die aufbereiteten Überwachungstupel gebildet. Sind in einem Überwachungstupel negative Überwachungsdaten identifiziert, werden diese soweit mit positiven Überwachungsdaten, wie sie als Daten aus dem Zwischenspeicher oder aus angeschlossenen Leuchten vorliegen, ersetzt. In einem Überwachungstupel werden negative Überwachungsdaten durch valide und aktuelle Daten, also positive Überwachungsdaten, überschrieben. Einzelne Leuchten und einzelne Werte einer Leuchte können durch Tests ermittelt werden. Wenn valide Testergebnisse vorliegen, werden die Daten, die die Tests wiedergeben, die Komponenten überschreiben, die in einem Tupel zuvor als nicht valide gekennzeichnet waren.

Die Verfügbarkeit bzw. die Zuverlässigkeit der Überwachung der Notlichtbeleuchtungsanlage kann weiter gesteigert werden, wenn jedes einzelne Hochfrequenzkommunikationsmodul die meiste Zeit seiner Betriebszeit in einem Empfangsmodus verharrt. Im Empfangsmodus empfängt das Hochfrequenzkommunikationsmodul Überwachungstupel, also Überwachungsdaten von Hochfrequenzkommunikationsmodulen anderer Leuchten und ggf. Steuerdatensätze von den Hochfrequenzkommunikationsmodulen anderer Leuchten oder der leuchtenübergreifenden Einheit. Im Sendemodus werden anschließend die empfangenen Überwachungstupel und/oder ggf. Steuerdatensätze ausgesendet. Wird die gesamte Betriebszeit eines Hochfrequenzkommunikationsmoduls mit 100 % angenommen, so hat es sich gezeigt, wenn der Empfangsmodus wenigstens 90 % der Dauerbetriebszeit eingenommen worden ist, wird eine Zuverlässigkeit der Datenübertragung hergestellt. Es ist in der Regel ausreichend, wenn das Hochfrequenzkommunikationsmodul maximal 0,9% der Betriebszeit im Sendemodus steht. Oft beträgt die Sendezeit eines Überwachungstupels weniger als 0,8 % der Betriebszeit des Hochfrequenzkommunikationsmoduls. Der größere Anteil im Empfangsmodus trägt dazu bei, dass keine Überlastung der Übertragung, insbesondere der Funkübertragung, zwischen den Hochfrequenzkommunikationsmodulen stattfindet. Die Hochfrequenzkommunikationsmodule können die von ihnen benötigte Zeit für ihren Sendemodus durch Steuerbefehle aufeinander abstimmen, sodass im Empfangsmodus Signale einer Vielzahl von Hochfrequenzkommunikationsmodulen empfangen und zwischengespeichert werden können.

In einem der Hochfrequenzkommunikationsmodule kann ein Zeitstempel, ein Aktualitätsstempel oder ein Synchronisationsmodul vorhanden sein. Mit Hilfe einer solchen Einheit im Hochfrequenzkommunikationsmodul können die Datensätze und Überwachungstupel übertragen werden. Eine solche Einheit bildet eine Aktualitätsreferenz im Hochfrequenzkommunikationsmodul. Die Synchronisation kann von der Zentraleinheit initiiert und zentral gesteuert koordiniert werden. Hierbei können die unterschiedlichsten Daten in geeigneten Zeitabständen übertragen werden. Der Aktualitätsstempel lässt sich in wiederkehrenden Abständen an alle Hochfrequenzkommunikationsmodule übertragen. In einer alternativen Ausgestaltung können auch nur bestimmte Hochfrequenzkommunikationsmodule mit dem Aktualitätsstempel, z. B. immer wieder, ausgestattet werden. Ein Synchronisationsmodul, das in der Zentraleinheit eingerichtet ist, steuert über seine Zählfunktion die Gültigkeit der Aktualitätsstempel. In Bezug auf die Synchronizität arbeitet die Zentraleinheit als Master. In einer ersten Ausgestaltung kann der Aktualitätsstempel von einem Sequenzgenerator, der in der leuchtenübergreifenden Einheit vorhanden ist, vorgegeben werden, was bezüglich der Hochfrequenzkommunikationsmodule vorteilhaft ist. Alternativ kann auch jedes Hochfrequenzkommunikationsmodul über einen Sequenzgenerator verfügen. Das Signal des Sequenzgenerators, das in einem Überwachungstupel vorhanden ist, lässt sich von einem weiteren Hochfrequenzkommunikationsmodul werfen, wenn eine Überschreitung einer (maximal erlaubten) Höchstdauer ohne Erhalt neuer Daten abgelaufen ist. Fehlt ein neuer, fortgeschrittener Aktualitätsstempel, so lassen sich die Daten des Überwachungstupels verwerfen. In einer weiteren Ausgestaltung ist die Verwendung eines Sequenzgenerators in einem einzigen Hochfrequenzkommunikationsmodul gegeben, bspw. in der Leuchte, in der das Hochfrequenzkommunikationsmodul mit der höchsten Gerätenummer vorhanden ist.

Durch die erste Ausgestaltung eines Sequenzgenerators in der leuchtenübergreifenden Einheit wird die Auslastung der Datenübertragung weiter gesenkt, weil alle Hochfrequenzkommunikationsmodule gleichzeitig den jeweiligen Aktualitätsstempel erhalten. Mittels der Aktualitätsstempel lassen sich die Längen von Kommunikationspfaden zu einzelnen Leuchten oder auch die Zahl zwischengeschalteter Kommunikationsknoten (in Gestalt von Hochfrequenzkommunikationsmodulen) kontrollieren, wodurch die Betriebssicherheit des Netzes der Hochfrequenzkommunikationsmodule der Notlichtbeleuchtungsanlage, d. h. mit anderen Worten der Leuchtenüberwachung, erhöht wird. Ein aktuelles Abbild der Kommunikationsnetzstruktur kann erstellt werden. Durch den Einbau von Repeatern kann die Struktur von Kommunikationspfaden, welche sich über die Hochfrequenzkommunikationsmodule erstreckt, optimiert werden. Bspw. ist es aus Sicherheitsgründen vorzuziehen, wenn jedes Hochfrequenzkommunikationsmodul über mehrere unterschiedliche Kommunikationspfade seine Überwachungstupel oder ggf. Steuerdaten weiterleiten kann. Die Kommunikationspfade sind nicht festgelegt. Die einzelnen Komponenten eines Überwachungstupels und ggf. Steuerdaten breiten sich - typischerweise - über eine Vielzahl verschiedener Kommunikationspfade aus. Somit können Überwachungstupel und ggf. Steuerdatensätze Ausfallsstrukturen, z. B. aus defekten Hochfrequenzkommunikationsmodulen, im Kommunikationsnetz aufweisen. Eine erhöhte Sicherheit ergibt sich auch durch ein dezentrales Netzwerkmanagement, bei dem eine autonom erfolgte Einstellung eines Betriebsparameters einer Leuchte zur Kontrolle einer leuchtenübergreifenden Einheit mitgeteilt wird.

Es ist weiterhin vorteilhaft, wenn ein Frequenzband gewählt ist, in dem die Übertragung zuverlässig funktioniert. Es hat sich gezeigt, dass es in vielen Anwendungsfällen günstig ist, wenn als Frequenzband für die Datenübertragung zu und von den Hochfrequenzkommunikationsmodulen ein Frequenzband, das in einem Bereich zwischen 140 kHz und 10 GHz liegt, genommen wird. Häufig reicht es aus, wenn die obere Grenze des Frequenzbandes bei 2,5 GHz angesetzt wird. Ein besonders vorteilhaftes Frequenzband ist ein Hochfrequenzband, z. B. in einem Bereich zwischen 868 MHz und 870 MHz. Das Frequenzband steht besonders gut für Funkverbindungen zur Verfügung. Ein weiteres Frequenzband, das ebenfalls günstig zu nutzen ist, ist das Frequenzband zwischen 140 kHz und 150 kHz. Ein solches niederfrequentes Frequenzband kann sowohl als Funkübertragungsfrequenzband als auch als leitungsgebundenes Frequenzband genutzt werden.

Eine in einer Notlichtbeleuchtungsanlage angeordnete Leuchte umfasst mehrere Bauteile. Ein häufig verwendetes Bauteil einer Leuchte ist eine Aufsteckplatine. Eine Aufsteckplatine kann z. B. ein Messplatinenteil und ein Datenübertragungsplatinenteil umfassen. Das Datenübertragungsplatinenteil ist die Basis des Hochfrequenzkommunikationsmoduls, welche in eine Leuchte auch nachträglich eingebaut oder eingesteckt bzw. mit einer anderen dort vorhandenen Platine ausgetauscht werden kann. Vielfach wird die Messeinheit auf dem Messplatinenteil mit mindestens einem Sensor, wie einem Sensor für Licht oder für elektrische Spannung oder Strom, ausgestattet.

Notlichtbeleuchtungsanlagen, die einen Modus aufweisen, in dem sie auf zusätzliche Sensoren reagieren können, z. B. im Falle eines Brandes, an einem Ort der Notlichtbeleuchtungsanlage eine Umgebungsbedingung wie eine Temperatur oder eine Helligkeit erheben. In einer Leuchte mit einem integrierten Sensor kann dezentral eine Einstellung eines Betriebsparameters der Leuchte durch die Sensorinformation bewirkt werden. Es ist vorteilhaft, wenn ein Hochfrequenzkommunikationsmodul zugleich mit einer Antenne ausgestattet ist. Eine günstige Konfiguration liegt auch vor, wenn das Hochfrequenzkommunikationsmodul und ggf. die Antenne in einem Gehäuse integriert sind. Besteht das Gehäuse, insbesondere der Leuchte, aus elektromagnetisch transparentem Kunststoff, so kann die Antenne bspw. als eine Struktur auf einer Platine mit in das Gehäuse eingebaut sein. Ein Metallgehäuse hat sich überraschend in umfangreichen Tests ebenfalls bewährt. Alternativ kann das Hochfrequenzkommunikationsmodul in einem eigenen, außenliegenden Gehäuse angeordnet sein, oder ggf. die Antenne außenliegend befestigt und mit dem Hochfrequenzkommunikationsmodul verbunden sein.

Funktional mit dem Hochfrequenzkommunikationsmodul verbunden oder in dieses integriert ist eine Kontrolleinheit, welche die Überwachungsdaten aus dem Überwachungstupel analysiert. Weiterhin speichert die Kontrolleinheit ein empfangenes Überwachungstupel in einen Zwischenspeicher. Das empfangene Signal wird in der Kontrolleinheit auf mögliche Übertragungsfehler geprüft. Es erfolgt ein Abgleich mit einem Sollwert. Der Sollwert kann in Form eines Messwerts einer Messeinheit vorgegeben sein. Ein Sollwert kann aber auch ein Datenwert aus dem Zwischenspeicher sein, welcher zur Aktualisierung einer Komponente der Überwachungstupel geeignet ist. Ein Signal, welches von einem zweiten Hochfrequenzkommunikationsmodul kommend rauschbehaftet empfangen wird, ist im Allgemeinen auch von geringer Intensität. Daher ist ein Hochfrequenzkommunikationsmodul vorteilhaft mit einer Verstärkereinheit ausgestattet, sodass das schwache Signal aus der Empfangseinheit des Hochfrequenzkommunikationsmoduls in ein starkes Sendesignal eines Übertragungstupels zur Abgabe aus einer Sendeeinheit des Hochfrequenzkommunikationsmoduls umgewandelt werden kann.

Ein energieeffizientes Hochfrequenzkommunikationsmodul ist so gestaltbar, dass die zum Sendebetrieb eingesetzte elektrische Leistung nur 1/5 der maximal für die Versorgung der Leuchtmittel einer Leuchte wie LEDs benötigten Leistung beträgt. In einer kompakten Bauform gehört zu einer Leuchte ein Vorschaltgerät. Das Vorschaltgerät ist sowohl mit den Leuchtmitteln als auch mit dem Hochfrequenzkommunikationsmodul elektrisch leitend verbunden. Das Vorschaltgerät ist weiterhin mit einer Energiequelle, vorzugsweise einer aufladbaren elektrischen Energiequelle, also einer Energieversorgung, leitend verbunden. Vorteilhaft ist zudem ein Vorschaltgerät, welches ein Spannungsniveau, einen Stromfluss oder beides in Abhängigkeit von einander, wie z. B. einen Leistungsfluss, bei dem das Produkt aus Spannung und Strom konstant gehalten wird, der Energieversorgung regelt. Aus der Energieversorgung des Leuchtmittels, die durch das Vorschaltgerät geleitet wird, kann bei kleiner Leistung (im ein- oder zweistelligen Wattbereich) der Energiebedarf des Hochfrequenzkommunikationsmoduls abgezweigt werden, was eine weniger material- und kostenintensive Ausgestaltung ermöglicht als eine Ausführung, bei der das Hochfrequenzkommunikationsmodul mit einer eigenen Stromversorgung an das Versorgungsnetz angeschlossen ist. Das Hochfrequenzkommunikationsmodul wird über das Vorschaltgerät jeweils mit ihrem spezifizierten Spannungsniveau versorgt, welches z. B. einen Wert zwischen 3,6 V und 12 V betragen kann. Eine elektrische Leistung der Übertragungsbaugruppe, d. h. der Empfangseinheit und der Sendeeinheit im Verbund mit der Kontrolleinheit, beträgt weniger als 20 % einer Nennleistung der Leuchte, welche mit dem Wert "100 %" angesetzt ist.

Das Verfahren lässt sich besonders vorteilhaft mit Notlichtbeleuchtungsanlagen umsetzen, die mit Leuchten mit geringthermischen Leuchtmitteln ausgestattet sind. Als geringthermische Leuchtmittel werden solche Leuchtmittel bezeichnet, die weniger als 50 % der aufgenommenen elektrischen Energie in Wärme umsetzen, z. B. LEDs. Bei solchen Leuchten kann das Hochfrequenzkommunikationsmodul in der Leuchte verbaut sein. Trotz Abwärme wird das Hochfrequenzkommunikationsmodul nicht soweit gestört, dass es nicht mehr als zuverlässige Datenübertragungseinheit arbeitet. Die Leuchtmittel sind vorzugsweise geringthermische Leuchtmittel.

In größeren Notlichtbeleuchtungsanlagen, die sich aus einzelnen, kleineren selbständig arbeitenden Notlichtbeleuchtungsgruppen und Subsystemen zusammensetzen kann das erfindungsgemäße Notlichtbeleuchtungssystem und das erfindungsgemäße Notlichtbeleuchtungsverfahren autonom in jedem Subsystem umgesetzt werden. Die Subsysteme sind disjunktiv bezüglich der Hochfrequenzkommunikation, aber sie sind entweder auf einer Ebene der leuchtenübergreifenden Einheit verknüpft oder sie können durch eine Verbindung mehrerer leuchtenübergreifender Einheiten verknüpft werden. In jedem Subsystem lassen sich die Kommunikationskanäle ähnlich aufbauen bzw. realisieren. Eine Skalierbarkeit ist gegeben.

Die vorgestellte Lösung zur Kommunikation zwischen einzelnen Komponenten einer Notlichtbeleuchtungsanlage greift unter anderem auf die Überlegung zurück, dass die kommunikative Verbindung in der Notlichtbeleuchtungsanlage in einer ersten Näherung als statistischer Prozess zu betrachten sei. Mit einer Wahrscheinlichkeit, die mit der Güte des Netzes der Notlichtbeleuchtungsanlage zusammenhängt, kann die Übertragungswahrscheinlichkeit für ein Überwachungstupel angenommen werden. Nach einem anderen Aspekt ist die Güte des Kommunikationsnetzes der Notlichtbeleuchtungsanlage durch die Übertragungswahrscheinlichkeit einer Komponente des Überwachungstupels spezifizierbar.

Das Übertragungsverfahren greift auf die Erkenntnis zurück, dass in einer Notlichtbeleuchtungsanlage mit einer beliebigen Anzahl an Kommunikationskanälen (nahezu) jede Leuchte der Notlichtbeleuchtungsanlage einen Versuch unternimmt, Datensätze bzw. das Überwachungstupel an die Zentraleinheit oder an die leuchtenübergreifende Einheit weiterzureichen. Vorteilhaft ist dabei, dass alle Hochfrequenzkommunikationsmodule als Hilfskommunikationsmodule für die übrigen Leuchten zur Verfügung stehen.

Für Kontrollabfragen und Steuereingriffe kann eine leuchtenübergreifende Einheit mit einer Eingabeeinheit wie einer Tastatur und einer Wiedergabeeinheit wie einem Bildschirm ausgestattet sein. Nützlich sind auch leuchtenübergreifende Einheiten, die eine Anschlussmöglichkeit für ein Kommunikationsmodul z. B. zur Interaktion mit einem Kontrolleur, wie einem Wachmann, besitzen. Besonders vorteilhaft ist es, wenn die leuchtenübergreifende Einheit als Leuchtenüberwachung an einer zentralen Stelle in der Notlichtbeleuchtungsanlage, z. B. in der Zentralbatterieanlage, angeordnet ist. Zwar ist es auch vorstellbar, dass eine leuchtenübergreifende Einheit in einer Leuchte integriert sein kann, besonders vorteilhaft ist es jedoch, wenn die leuchtenübergreifende Einheit, also die leuchtenübergreifende Leuchtenüberwachung, möglichst nahe an einer Anzeigeeinheit montiert ist. Eine leuchtenübergreifende Einheit kann separat zu den Leuchten der Notlichtbeleuchtungsanlage an einem zugänglichen Ort, vorzugsweise in einem eigenen Gehäuse, montiert sein.

Die Auswertung der empfangenen Daten in der Zentraleinheit erfolgt nach einem Aufbereiten der empfangenen Daten. Anhand der Validitätsergänzung wird ermittelt, ob das empfangene Überwachungstupel gültige Informationen beinhaltet. Andernfalls kann in einer besonders vorteilhaften Gestaltung durch eine Fehlerkorrektur versucht werden, den (eingeschlichenen) Fehler zu beheben. Anschließend wird anhand des Aktualitätsstempels bestimmt, ob das Überwachungstupel noch ausreichend aktuell ist. Werden einzelne Attribute als fehlerhaft erkannt, so kann nur diesem Attribut die Bedeutung eines negativen Überwachungsdatums zugeordnet werden.

Das vorgestellte Datenübermittlungsverfahren arbeitet besonders gut, wenn eine mittlere Anzahl an Leuchten zu überwachen ist. Im Moment gelten Notlichtbeleuchtungsanlagen mit Leuchten in einer Größenordnung von 20 bis 1200 Leuchten als Notlichtbeleuchtungsanlagen mit einer mittleren Anzahl Leuchten. Besonders effizient ist die Notlichtbeleuchtungsanlage, wenn mindestens 50 Leuchten bzw. weniger als 300 Leuchten zu einer Notlichtbeleuchtungsanlage integriert sind. Anhand von Bitpositionen im Überwachungstupel kann der Zustand einer einzelnen Leuchte unmittelbar ausgelesen werden. Anhand von Bitpositionen im Steuerdatensatz können von der Leuchte Aufgaben erkannt und abgearbeitet werde. Eine solche Aufgabe ist z. B. ein Akkumulatorkapazitätstest durch eine Dauerprüfung einer Energieversorgung. Dabei wird die Energieversorgung der Leuchte, die aus einem externen Versorgungsnetz im Regelfall bezogen wird, unterbrochen und das Leuchtmittel wird aus der integrierten Energieversorgung der Anlage, dem zu testenden Akkumulator, versorgt. Diese Energieversorgung der Leuchtmittel wird für eine festgelegte Zeit, z. B. eine Stunde, beibehalten und die Spannung des Akkumulators gemessen. Unterschreitet die Spannung des Akkumulators in der festgelegten Zeit einen von der Norm vorgeschriebenen Wert, wie 1 V/Zelle, so wird der Kapazitätstest mit negativem Ergebnis abgebrochen, andernfalls mit positivem Ergebnis vermerkt. Die Messergebnisse werden oder das Testergebnis wird in ein Überwachungstupel geschrieben. Aus den Messergebnissen wird dann in einer leuchtenübergreifenden Einheit oder einer Zentraleinheit die Akkumulatorkapazität bestimmt und bei Unterschreitung eines Sollwertes eine Meldung ausgelöst, ebenso wie für ein negatives Testergebnis.

Vorteilhaft kann - insbesondere bei Einzelbatterieanlagen - die Betriebszeit verlängert werden, wenn möglichst mit niedrigen Leistungen von einem Hochfrequenzkommunikationsmodul zu einem anderen Hochfrequenzkommunikationsmodul übertragen wird. Versuchsreihen mit erfindungsgemäßen Notlichtbeleuchtungsanlagen haben gezeigt, dass - je nach Gebäudeausstattung - mit angepasster Sendeleistung gearbeitet werden kann. Die Sendeleistung kann zwischen 0,1 mW und 500 mW variieren. Die Notlichtbeleuchtungsanlage startet z. B. mit 10 mW. Stellt die Zentraleinheit oder eine andere leuchtenübergreifende Einheit fest, dass permanent Überwachungstupel, insbesondere mit Überwachungsdaten zu allen Kommunikationsknotenpunkten, mit ausreichend aktuellen Aktualitätsstempeln zu der Zentraleinheit gelangen, erhalten die Hochfrequenzkommunikationsmodule die Mitteilung, die Sendeleistung probeweise zu senken, z. B. in 0,1 mW-Schritten bis auf 5 mW. Werden Leuchten in einem Überwachungstupel nicht mehr abgebildet, so wird die Sendeleistung wieder angehoben, z. B. in 0,5 mW-Schritten, bis bspw. maximal zu dem ursprünglichen Ausgangswert der Sendeleistung. Werden zuverlässige Überwachungstupel mit einer Sendeleistung zwischen dem maximalen und dem minimalen Sendeleistungswert in der Zentraleinheit erkannt, so wird diese Sendeleistung beibehalten. Nach dem gleichen Schema lässt sich auch die Übertragungshäufigkeit variieren und an lokale Gegebenheiten anpassen.

In der Notlichtbeleuchtungsanlage ist ein Aktualitätsstempel vorhanden. Dieser wird zum Filtern empfangener Überwachungstupel verwendet. Es wird eine Prüfung der Überwachungstupel durchgeführt. Nach einem Aspekt liegt ein Schwerpunkt der Prüfung auf der Aktualität der Daten in den Komponenten der Überwachungstupel. Dabei wird in einer logischen Analyse ein Aktualitätsstempel mit einem zweiten Aktualitätsstempel verglichen. Es kann auch eine Differenz eines Aktualitätsstempels zu einer Aktualitätsreferenz erhoben werden. Überwachungstupel aus dem Zwischenspeicher werden ebenfalls einer Aktualitätsprüfung unterzogen. Werden die in einem Zwischenspeicher des Hochfrequenzkommunikationsmoduls vorhandenen Daten von dem Filter, der die Aktualitätsprüfungen vornimmt, als ausreichend aktuell angesehen, d. h. innerhalb eines Aktualitätsfensters, so werden die Daten über eine logische Verbindung verknüpft. Diese logische Verknüpfung ist vorzugsweise eine Bildung einer Vereinigungsmenge aller positiven Testresultate. Im Falle eines Bitvektors für Daten ist dies eine "Oder"-Verknüpfung, wenn negative Testergebnisse in den Daten durch eine logische "0" repräsentiert sind. Verknüpfte Daten werden versendet. Ist keine Zustandsänderung in den Daten angezeigt, erfolgt der Versand der Daten wiederholt mit gleichbleibendem Aktualitätsstempel, der auch als Marker der Aktualität der ältesten in dem Überwachungstupel enthaltenen Daten bezeichnet werden kann oder wenn der Aktualitätsstempel datenweise verwendet wird als Marker für das Alter des Datums. Es handelt sich um eine Markierung für einen Betriebszeitpunkt der Notlichtbeleuchtungsanlage, die insbesondere an ein Ereignis gekoppelt sein kann. Ein solches Ereignis erzeugt bspw. eine Synchronisationseinheit in einer leuchtenübergreifenden Einheit oder in einer Zentraleinheit. Das in der Synchronisationseinheit definierte Ereignis wird dann in Übertragungstupeln an alle Hochfrequenzkommunikationsmodule der Notlichtbeleuchtungsanlage weitergegeben. Ein Aktualitätsstempel kann auch einen zeitlichen Verlauf zu einer vorhergehenden Zustandsänderung bspw. eine Änderung eines Tupels eines Hochfrequenzkommunikationsmoduls oder eine Zustandsänderung einer Leuchte z. B. durch Abzählung einer Zeitintervallgröße anzeigen. Ein Aktualitätsfenster bezeichnet ein Erwartungsintervall für einen Aktualitätsstempels. Ein solches Aktualitätsfenster kann betriebsbedingt z. B. im Rahmen einer Messaufgabe vorgegeben sein.

Nach einem Aspekt des erfindungsgemäßen Prinzips, lassen sich Überwachungsdaten in Form von Überwachungstupeln von einer ersten Leuchte für Notlicht an eine zweite Leuchte für Notlicht oder an einen Repeater innerhalb der Notlichtbeleuchtungsanlage übertragen. Die Überwachungsdaten, d. h. Steuerdaten und/oder Betriebsdaten von Notlichtleuchten, können sowohl an einer Zentraleinheit als auch an einer zentralen Kontrolleinheit, wie einer leuchtenübergreifenden Einheit, oder an einer Einheit für eine Gebäudeleittechnik, entweder lokal oder z. B. über Internet verbunden, übertragen werden.

Die zuvor dargestellten Kombinationen und Ausführungsbeispiele lassen sich auch in zahlreichen weiteren Verbindungen und Kombinationen betrachten.

Besonders vorteilhaft ist es, wenn ein Hochfrequenzkommunikationsmodul Daten zur Generierung der Überwachungstupel zwischenspeichert und zeitlich versetzt, insbesondere wiederholend sendet. Ein zeitlicher Versatz zwischen Empfangen und Senden hat den Vorteil, dass die gleichen Kommunikationspfade durch Übertragung in einem Bereich der Hochfrequenz und hierbei der gleiche Frequenzbereich genutzt werden kann, ohne dass das Senden der Daten das Empfangen der Daten stört (Verringerung möglicher Kollisionen). Durch ein wiederholtes Senden mit jeweils einem zeitlichen Versatz wird dem Rechnung getragen, dass der Kommunikationspfad aufgrund der jeweils vorgefundenen qualitativen Situation zeitlich variabel, insbesondere in Bezug auf die Netzknotenpunkte, ist. Beispielsweise kann im Fall eines funkbasierten Hochfrequenzkommunikationspfads (HF-Kommunikation) eine oder sogar eine Gruppe von Leuchten, wie z. B. mehrere Sicherheitsleuchten und/oder mehrere Rettungszeichenleuchten, von einer Einheit zur leuchtenübergreifenden Leuchtenüberwachung abgeschnitten sein. Typische Ursachen sind Notlichtbeleuchtungsanlagen mit wenigen, effizienten Leuchten, die LEDs als Leuchtmittel einsetzen, und einer gleichen oder ähnlichen, insbesondere geringeren Anzahl Hochfrequenzkommunikationsmodule, die in einem Gebäude verbaut sind, das mit stahlarmierten Gebäudewänden und -decken ausgestattet ist, die trotz des - durch die ausgewählten Frequenzbänder auf das Gebäude abgestimmten - Frequenzbandes Signale, insbesondere die über Funk übertragenen Signale, so weit abschwächen, dass nicht alle Tupel übertragen werden. Kommt erschwerend hinzu, dass das Gebäude wenigstens bereichsweise stark besucht ist, können die Menschen, die als Besucher des Gebäudes anwesend sind, deren Körper ebenfalls Signale, insbesondere funkbasierte Signale, absorbieren, die Kommunikationspfade in einzelnen Bereichen des Gebäudes unterbinden. Wird nun die Annahme getroffen, dass in dem Bereich des Gebäudes und somit in dem betrachteten Abschnitt mit Hochfrequenzkommunikationsmodulen, also in dieser abgeschnittenen Gruppe, untereinander aber eine Verbindung über diesen Teil des Kommunikationsnetzes erfolgt, hat jede Leuchte mit Hochfrequenzkommunikationsmodul Kenntnis über die Überwachungsergebnisse der anderen Leuchten dieser Gruppe. Kommt es später oder nachfolgend zu einer anderen Betriebsphase bzw. Konfiguration bzw. zu geänderten Funkverhältnissen in dem Gebäude, ist eine ausreichende Wahrscheinlichkeit gegeben, dass für eine dieser Leuchten wieder mit der Einheit zur leuchtenübergreifenden Leuchtenüberwachung ein zumindest mittelbarer Kommunikationspfad möglich ist. Über diesen Kommunikationspfad können nun sämtliche Überwachungsdaten der zuvor abgeschnittenen Gruppe an die Einheit zur leuchtenübergreifenden Leuchtenüberwachung übertragen werden, von denen das Hochfrequenzkommunikationsmodul Kenntnis erlangt und die es gespeichert hat. Weil das betrachtete Hochfrequenzkommunikationsmodul sämtliche Daten der Gruppe gespeichert hat, funktioniert die Weiterleitung an die Einheit zur leuchtenübergreifenden Leuchtenüberwachung auch, wenn das Hochfrequenzkommunikationsmodul zwischenzeitlich durch wechselnde Gegebenheiten die Verbindung zu allen Mitgliedern der herausgedeuteten Gruppe verloren hat.

Die Funktionalität der Sicherheits- bzw. der Notlichtbeleuchtungsanlage kann durch vorteilhafte Erweiterung der leuchtenübergreifenden Leuchtenüberwachung ergänzt werden. Die Zentraleinheit kann kombiniert mit dem Aktualitätsstempel auch Steuerinformationen an Leuchten verteilen. Diese Steuerinformationen können zur Initiierung eines Funktionstests oder eines Akkumulatorkapazitätstests dienen, aber auch ein Ein- oder Ausschalten des Leuchtmittels veranlassen. Aktualitätsstempel und Steuerinformationen werden dabei vorzugsweise an alle Leuchten bzw. Hochfrequenzkommunikationsmodule versendet und alle Hochfrequenzkommunikationsmodule, die diese Daten empfangen, leiten sie wiederum zeitversetzt und wiederholt weiter. Veraltete Daten werden dabei durch neue Daten, ausweislich eines aktuelleren Aktualitätstempels, überschrieben. Leuchten- oder leuchtengruppenspezifische Steuerinformationen können dabei vorteilhaft als Bitvektor übertragen werden, wobei jedes Bit oder jede Bitgruppe nur einer Leuchte bzw. nur einer Gruppe von Leuchten zugeordnet ist.

### Figurenkurzbeschreibung

Die vorliegende Erfindung kann noch besser verstanden werden, wenn Bezug auf die beiliegenden Figuren genommen wird, die beispielhaft besonders vorteilhafte Ausgestaltungsmöglichkeiten darlegen, ohne die vorliegende Erfindung auf diese einzuschränken, wobei
Figur 1 ein Gebäude mit einer Notlichtbeleuchtungsanlage zeigt und
Figur 2 eine Leuchte zeigt, in die ein Hochfrequenzkommunikationsmodul integriert ist,
Figur 3 ein Hochfrequenzkommunikationsmodul zeigt,
Figur 4 ein Segment einer Notlichtbeleuchtungsanlage zeigt,
Figur 5 einige Möglichkeiten der Übertragung von Überwachungstupeln zwischen Hochfrequenzkommunikationsmodulen aus Figur 4 detaillierter veranschaulicht und
Figur 6 eine mögliche Verschaltung eines Hochfrequenzkommunikationsmoduls mit Leuchtmitteln zeigt.

### Figurenbeschreibung

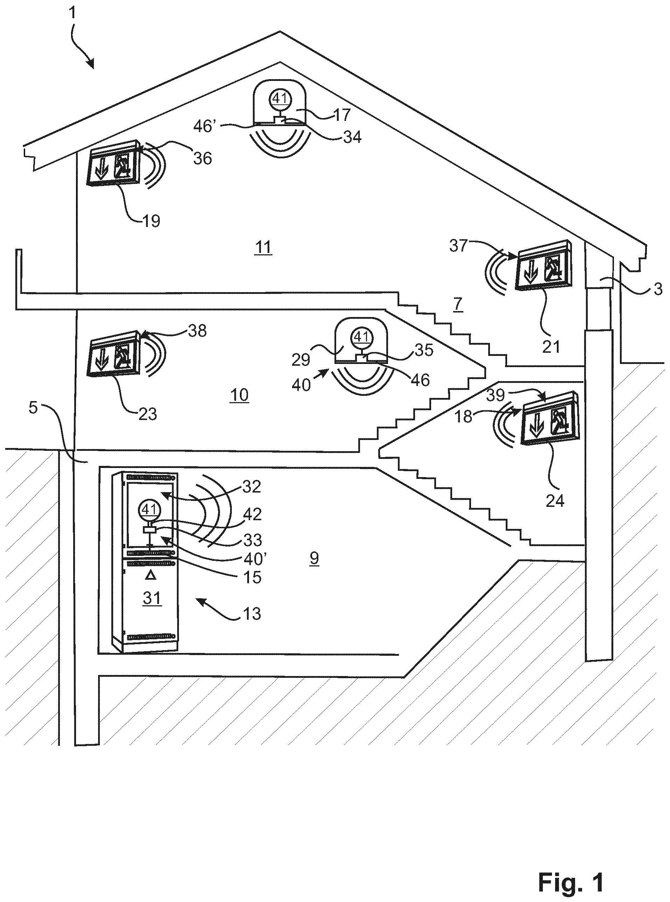

Figur 1 zeigt ein Gebäude 3. Das Gebäude 3 ist mit einer Notlichtbeleuchtungsanlage 1 ausgestattet. Zu einer Notlichtbeleuchtungsanlage 1 gehört eine Zentraleinheit 13. Weiterhin umfasst die Notlichtbeleuchtungsanlage 1 die erste, zweite und dritte Leuchte 19, 21 und 23 sowie einen Repeater 29. Außerdem ist die Notlichtbeleuchtungsanlage 1 mit einer ersten leuchtenübergreifenden Einheit 17 und einer zweiten leuchtenübergreifenden Einheit 18 ausgestattet. Die zweite leuchtenübergreifende Einheit 18 kann, so wie dargestellt, in der Nähe einer Leuchte 24 angeordnet sein. Die Zentraleinheit 13 ist für die (zumindest zeitweise) Energieversorgung 31 vorgesehen. An der Zentraleinheit 13 ist günstigerweise eine Leuchtenüberwachung 32 vorhanden, die auf einen ersten schnellen Blick hin den Zustand der Notlichtbeleuchtungsanlage 1 mit sämtlichen Leuchten 19, 21, 23, 24 sowie weiteren nicht dargestellten Leuchten in benachbarten Räumen und den leuchtenübergreifenden Einheiten 17, 18 sowie dem Repeater 29 anzeigt. Die Zentraleinheit 13 wird, um normungsgemäßen Anforderungen gerecht zu werden, gerne in einem ersten Brandabschnitt 9 angeordnet, dessen Feuerfestigkeit durch eine gesonderte Betonwanne 5 hergestellt ist. Der Fluchtflur 7 befindet sich in einem zweiten Brandabschnitt 11, der von dem ersten Brandabschnitt 9 getrennt gehalten ist. Somit hat das Gebäude 3 verschiedene Brandabschnitte 9, 10, 11. Die Hochfrequenzkommunikationsmodule von Repeatern wie dem Repeater 29 und von Leuchten beinhalten Zwischenspeicher 41 und sind bspw. mit einer Antenne 46 ausgestattet. Vorteilhaft ist es, wenn insbesondere der Repeater 29 mit zwei oder mehreren, von einander beabstandeten Antennen ausgestattet ist, um im Fall von einer Beeinträchtigung des Empfangs oder aufgrund von Hochfrequenzemission durch Interferenzen die Kommunikationsübertragung von einer anderen Position durchführen zu können. Dies kann im einfachsten Fall durch Einbau von zwei oder mehreren Hochfrequenzkommunikationsmodulen 37, 39 (und ggf. zugehörigen Antennen - nicht dargestellt) erfolgen, die über eine dedizierte Leitung (nicht dargestellt) miteinander kommunizieren. Eine weitere Antenne 46' ist Teil des Hochfrequenzkommunikationsmoduls 34. Die einzelnen Leuchten 19, 21, 23, 24 haben jeweils ein eigenes Hochfrequenzkommunikationsmodul 36, 37, 38, 39. Die Überwachungsdaten der einzelnen Leuchten 19, 21, 23, 24 und der übrigen Netzknotenpunkte in Gestalt der leuchtenübergreifenden Einheiten 17, 18 und des Repeaters 29 werden mithilfe der Hochfrequenzkommunikationsmodule 34, 35, 36, 37, 38, 39 und der Übertragungsbaugruppen 40, 40' an die Zentraleinheit 13 weitergegeben. Dazu umfasst die Zentraleinheit 13 mindestens ein Hochfrequenzkommunikationsmodul 33. Das Synchronisationsmodul 15, das Teil der Zentraleinheit 13 ist, gibt einen Takt für alle Leuchten 19, 21, 23, 24 und in allen übrigen Netzknotenpunkten wie in den leuchtenübergreifenden Einheiten 17, 18. Das Synchronisationsmodul 15 bildet eine Aktualitätsreferenz 42, mit der insbesondere ein Aktualitätsstempel gesetzt wird. Auch in dem Repeater 29 oder auch in einer Leuchte 19, 21, 23, 24 kann in einer besonders günstigen Ausgestaltung das Synchronisationsmodul 15 integriert sein.

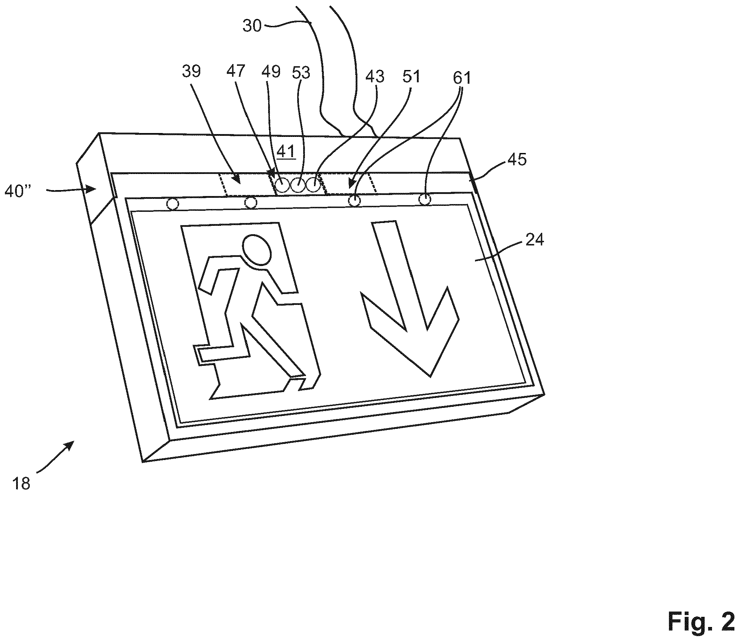

Figur 2 zeigt die Leuchte 24 in einer größeren Darstellung, sodass an der Leuchte 24 die Anordnung des Zwischenspeichers 41 und des Hochfrequenzkommunikationsmoduls 39 zu erkennen sind. Die Leuchte 24 ist so gestaltet, dass sie als leuchtenübergreifende Einheit 18 arbeiten kann. Die Leuchte 24 hat eine eigene Energieversorgung 30, über die sie bei Ausfall des Versorgungsnetzes bzw. bei einem zusammengebrochenen Versorgungsnetz mit einem Akkumulator verbunden ist. In einer alternativen Betrachtung kann jeder Leuchte wie der Leuchte 24 ein eigener Akkumulator zugeordnet werden, der in dem Gehäuse der Leuchte vorhanden ist, das Gehäuse der Leuchte enthält den Akkumulator. Über diese Verbindung, der Verbindung zwischen Akkumulator und Hochfrequenzkommunikationsmodul 39, wird zumindest zeitweilig elektrische Energie für die Leuchte 24 zur Verfügung gestellt. Die Leuchten wie die Leuchte 24 können in unterschiedliche Betriebszustände gehen. Einer der Betriebszustände ist die Bereitschaftsschaltung. Einer der Betriebszustände ist die Dauerschaltung. Im Falle der Einstellung der sogenannten Bereitschaftsschaltung für eine Leuchte gelangt Energie von dem Akkumulator zumindest bei bereichsweiser oder bei einer gesamten Störung des Versorgungsnetzes an das Hochfrequenzkommunikationsmodul 39, im Falle der Dauerschaltung gelangt immer Energie von dem Akkumulator zu dem Hochfrequenzkommunikationsmodul 39. Weiterhin hat die Leuchte 24 eine Übertragungsbaugruppe 40", zu der das Hochfrequenzkommunikationsmodul 39 und die Kontrolleinheit 47 gehören. Das Hochfrequenzkommunikationsmodul 39 in der Leuchte 24 ist mit einer Kontrolleinheit 47 verbunden, welche dem Hochfrequenzkommunikationsmodul 39 Statusinformationen bzw. Überwachungsdaten der Leuchte 24 bspw. hinsichtlich des Schaltzustands der Leuchtmittel 61 oder hinsichtlich der Restladung bzw. der noch vorhandenen Energie der Energieversorgung 30 zuführt. Mittels einer zwischengeschalteten Verstärkereinheit 49 können Messdaten einer Messeinheit 53, die einen Spannungssensor umfasst, auf ein für das Hochfrequenzkommunikationsmodul 39 erforderliches Spannungsniveau gebracht bzw. digitalisiert werden. Die Kontrolleinheit 47 dient weiterhin dazu, Überwachungstupel, die von dem Hochfrequenzkommunikationsmodul 39 empfangen wurden, zu analysieren und im Zwischenspeicher 41 abzulegen. Die Kontrolleinheit 47 bestimmt positive Überwachungsdaten und erstellt mittels Daten der Messeinheit 53 und der Überwachungstupel aus dem Zwischenspeicher 41 ein neues, valides Überwachungstupel, welches mit einem Aktualitätsstempel aus einem Tourenzähler 43 und mit einer Validitätsergänzung versehen ist. Das Überwachungstupel mit positiven Überwachungsdaten aus der Leuchte 24 wird dem Hochfrequenzkommunikationsmodul 39 zugeleitet und anschließend von dem Hochfrequenzkommunikationsmodul 39 versendet. Das Überwachungstupel wird beim Versenden aus dem Hochfrequenzkommunikationsmodul über die Antenne 45 als elektromagnetische Welle abgestrahlt. Ein Vorschaltgerät 51 ist zudem in die Leuchte 24 eingebaut. Das Vorschaltgerät 51 dient der Energiezufuhr aus der Energieversorgung 30 zu den Leuchtmitteln 61. Das Vorschaltgerät 51 kann weiterhin der Energiezufuhr zu dem Hochfrequenzkommunikationsmodul 39 dienen. Ebenso kann das Vorschaltgerät 51 die Kontrolleinheit 47, an welcher auch der Zwischenspeicher 41 angeschlossen ist, mit Energie versorgen.

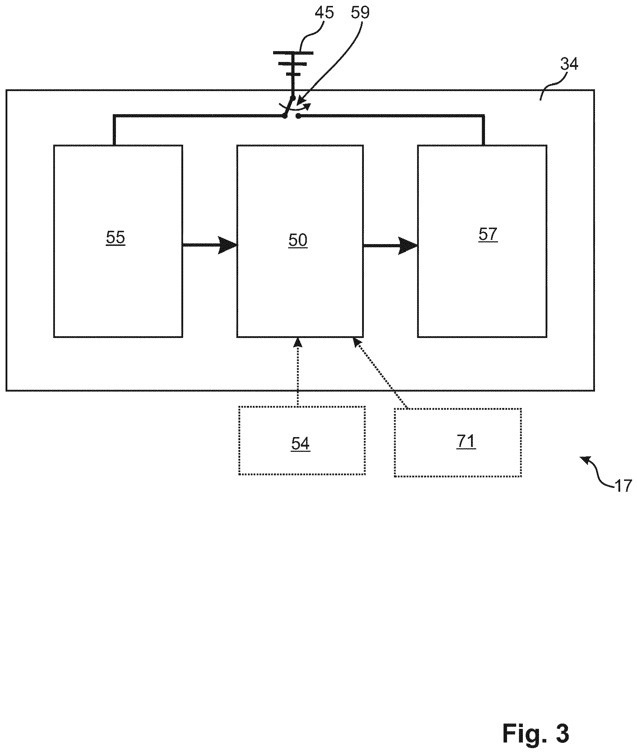

In Figur 3 ist schematisch ein Beispiel für ein Hochfrequenzkommunikationsmodul 34 einer leuchtenübergreifenden Einheit 17 dargestellt, welches insbesondere auch in einer Notlichtbeleuchtungsanlage 1 und darin in den Einheiten aus Figur 1, z. B. in einer Leuchte 23, in einem Repeater 29 oder in einer Zentraleinheit 13, eingesetzt werden kann. Von dem Hochfrequenzkommunikationsmodul 34 in Figur 3 werden in dem Zusammenwirken mit der Notlichtbeleuchtungsanlage 1 Überwachungstupel in der Antenne 45 empfangen und der Empfangseinheit 55 zugeführt. Hierbei steht der Modenumschalter in 59 in einer Empfangsstellung, die den Empfangsmodus des Hochfrequenzkommunikationsmoduls 34 zugeordnet ist. Die empfangenen Daten werden von der Empfangseinheit 55 an die Kontrolleinheit 50 abgegeben, welche auch an einen Zwischenspeicher (siehe Bezugszeichen 41 in Figur 1) angeschlossen ist. Die Kontrolleinheit 50 analysiert Validität und Aktualität des Überwachungstupels. Ist Validität und Aktualität gegeben, werden die Daten im Zwischenspeicher abgelegt oder mit dort bereits vorhandenen Daten verknüpft. Negative Überwachungsdaten, also wenn eine Leuchte oder eine Gruppe von Leuchten fehlerbehaftet war, werden erkannt und durch positive Überwachungsdaten ersetzt. Positive Überwachungsdaten können insbesondere somit aus zwischengespeicherten Überwachungstupeln hergeleitet werden. Ein valides Überwachungstupel wird regelmäßig in der Kontrolleinheit 50 erstellt und der Sendeeinheit 57 zugeführt. In einem Sendemodus des Hochfrequenzkommunikationsmoduls 34, der mithilfe des Modenumschalters 59 einnehmbar ist, wird das valide Überwachungstupel aus der Sendeeinheit über die Antenne 45 an die Umgebung des Kommunikationsnetzwerks der Notlichtbeleuchtungsanlage 1 abgegeben. Optional kann an die Kontrolleinheit 50 eine weitere Messeinheit 54. angeschlossen werden, welche Zustandsdaten bspw. einer Leuchte mittels Spannungs-, Strom-, Lichtsensor und/oder Temperatursensor erhebt und der Kontrolleinheit 50 zuführt. Weiterhin kann an die Kontrolleinheit 50 eine Kommunikationseinheit 71 optional angeschlossen werden, mit welcher über eine leitende Steckverbindung oder eine Datenübertragungsverbindung ein Zugriff auf die Daten der Kontrolleinheit 50 und damit ein Zugriff auf die in der Notlichtbeleuchtungsanlage 1 (siehe Figur 1) übertragenen oder zwischengespeicherten Daten der Überwachungstupel ermöglicht wird.

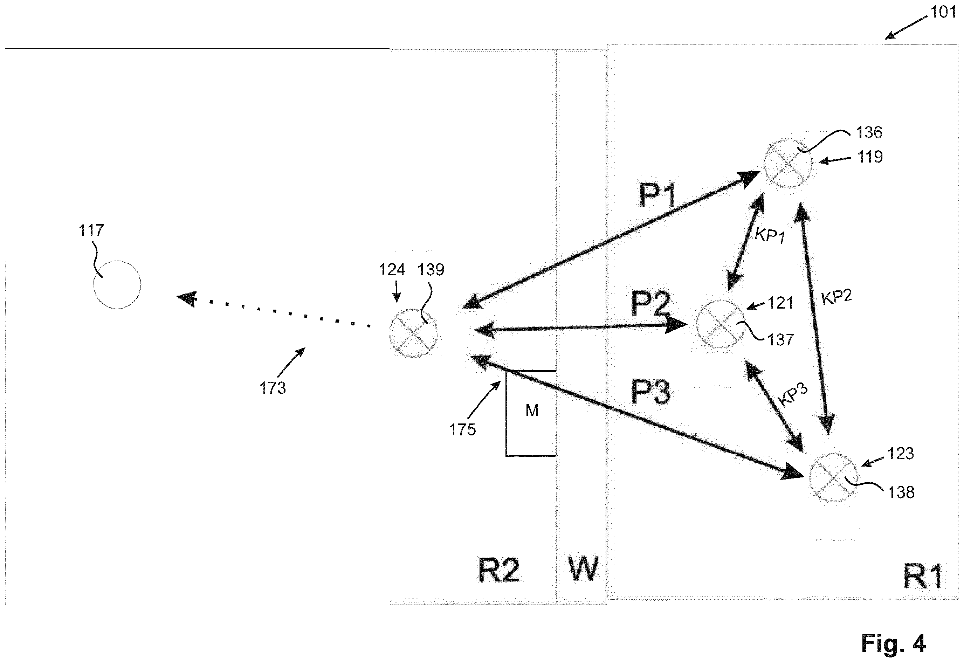

Figur 4 zeigt einen Ausschnitt einer Notlichtbeleuchtungsanlage 101 in einer stärker schematisierten Darstellungsart als in Figur 1. Die Notlichtbeleuchtungsanlage 101 ist mit einer Anordnung von Hochfrequenzkommunikationsmodulen 136, 137, 138, 139 ausgestattet, welche in zwei Räumen R1, R2 verteilt sind. In dem ersten Raum R1 befindet sich das erste Hochfrequenzkommunikationsmodul 136, eingebaut in der ersten Leuchte 119, das zweite Hochfrequenzkommunikationsmodul 137, verbunden mit der zweiten Leuchte 121, und das dritte Hochfrequenzkommunikationsmodul 138, angeschlossen an die dritte Leuchte 123. Der zweite Raum R2 umfasst eine vierte Leuchte 124 mit dem Hochfrequenzkommunikationsmodul 139, welches über die Kommunikationspfadlänge 173 von der leuchtenübergreifenden Einheit 117 beabstandet ist. Zwischen dem ersten Raum R1 und dem zweiten Raum R2 befindet sich eine Wand W, welche einen dämpfenden Einfluss auf elektromagnetische Strahlung ausübt. Übertragungstupel, die von der ersten Leuchte 119 bzw. dem ersten Hochfrequenzkommunikationsmodul 136 ausgesendet werden, können durch die Wand W über den ersten Kommunikationspfad P1 die leuchtenübergreifende Einheit 117 erreichen und nach Empfang durch die leuchtenübergreifende Einheit 117 analysiert bzw. verwertet werden. Weiterhin gelangen Überwachungstupel der zweiten Leuchte 121 aus dem zweiten Hochfrequenzkommunikationsmodul 137 über den Pfad P2 zur leuchtenübergreifenden Einheit 117. Unter realistischen Gebäudebedingungen besteht die Möglichkeit, dass abschirmende Stahlträgerelemente (nicht grafisch dargestellt) in der Wand W einen Kommunikationspfad P1, P2, P3 beeinträchtigen. Es ist auch möglich, dass Kommunikationspfad P3 durch eine Menschengruppe M blockiert wird, sodass Überwachungstupel des dritten Hochfrequenzkommunikationsmoduls 138 nicht mehr über den direkten Pfad P3 zur leuchtenübergreifenden Einheit 117 gelangen können. Die Menschengruppe M stellt eine totale Signalabschirmung 175 dar. Aufgrund der erfindungsgemäßen Ausgestaltung der Notlichtbeleuchtungsanlage 101 werden Überwachungstupel auch über die Kurzpfade KP2, KP3 und KP1 zwischen den im Raum R1 befindlichen Hochfrequenzkommunikationsmodulen 136, 137, 138 kommuniziert. In diesen Austausch von Überwachungstupeln ist auch das vierte Hochfrequenzkommunikationsmodul 139 eingebunden. Somit wirken die Hochfrequenzkommunikationsmodule 136, 137 und 139 als Kommunikationsknoten für eine indirekte Weiterleitung von Überwachungstupeln aus dem Hochfrequenzkommunikationsmodul 138 an die leuchtenübergreifende Einheit 117. Ein Überwachungstupel der dritten Leuchte 123 kann über den Kurzpfad KP2 von dem ersten Hochfrequenzkommunikationsmodul 136 empfangen und über den Kommunikationspfad P1 an die leuchtenübergreifende Einheit 117 weitergesendet werden. Ein Überwachungstupel der dritten Leuchte 123 kann auch über den Kurzpfad KP3 von dem zweiten Hochfrequenzkommunikationsmodul 137 empfangen und über den Kommunikationspfad P2 an die leuchtenübergreifende Einheit 117 weitergesendet werden. Außerdem werden Überwachungsdaten der dritten Leuchte, die von dem zweiten Hochfrequenzkommunikationsmodul 137 empfangen wurden, auch über den Kurzpfad KP1 dem ersten Hochfrequenzkommunikationsmodul 136 zugeführt, welches die Überwachungsdaten in Folge auch über den Kommunikationspfad P1 weiterleiten kann. Damit können z. B. kurzfristige Übertragungsstörungen auf einem Kurzpfad KP1, KP2, KP3 umgangen werden. Selbst wenn die Kommunikationspfade P1, P2, P3 und der Pfad 173 während einer Zeitspanne allesamt unterbrochen sind, danach jedoch bspw. der Kommunikationspfad P1 für eine kurze Zeitspanne verfügbar ist, gelangen sämtliche Testergebnisse von den Leuchten 119, 123 und 121 aus dem Zwischenspeicher der Leuchte 121 zu dem Zwischenspeicher der Leuchte 124. Ist zu einem späteren Zeitpunkt der Kommunikationspfad 173 verfügbar, gelangen die Testergebnisse schließlich zu der leuchtenübergreifenden Überwachungseinheit 117. Der Datenaustausch und die Kontrollfunktionen in der Notlichtbeleuchtungsanlage 101 sind sichergestellt, weil es keine Festlegung darüber gibt, welchen Pfad ein Überwachungstupel von einem Hochfrequenzkommunikationsmodul 136, 137, 138, 139 zur leuchtenübergreifenden Einheit 117 nimmt. Die Komponenten eines Überwachungstupels können gleichzeitig über eine Mehrzahl von Kommunikationspfaden ihr Ziel anstreben, wobei sich lediglich die Ankunftszeit insbesondere mit der Zahl der passierten Hochfrequenzkommunikationsmodule 136, 137, 138, 139 verzögert. Erst wenn die Ankunftszeit soweit verzögert ist, dass die Daten nicht mehr aktuell sind, werden hierdurch Kommunikations- oder Leuchtenstörungen gemeldet. Festlegungen, wann von einer Störung auszugehen ist, sind aus den einschlägigen Normen zu entnehmen und können hierfür 1 Tag, 1 Woche oder, je nach Umständen, einen Monat betragen.

Ein Vorteil einer erfindungsgemäßen Notlichtbeleuchtungsanlage 101 mit Datenübertragung von Überwachungsdaten in Überwachungstupeln, auch ohne ein total abschirmendes Element wie der Menschengruppe M (nach Figur 4), kann an einem einfachen Zahlenbeispiel abgeschätzt werden. Unter Annahme einer Datenübertragungswahrscheinlichkeit von 80 % auf jeweils einem Kommunikationspfad P1, P2, P3 hätte die Wahrscheinlichkeit für eine direkte Zuleitung von Überwachungsdaten der Leuchten 119, 121, 123 jeweils über die Kommunikationspfade P1, P2, P3 gemäß bekannter Techniken eine Größe von 0,8 * 0,8* 0,8 = 0,51, also ca. 50 %. Jeder zweite Test des Segments der Notlichtbeleuchtungsanlage 101 würde einen übertragungsbedingten Fehler aufweisen. Gemäß obiger Voraussetzung beträgt die Wahrscheinlichkeit einer nicht erfolgreichen Übertragung der Überwachungsdaten von einer Leuchte 20 %. Aufgrund der Tatsache, dass in einer erfindungsgemäßen Anordnung die gesamten Überwachungsdaten über jeden einzelnen der Kommunikationspfade P1, P2, P3 übertragen werden können, beträgt die Wahrscheinlichkeit für einen Fehlschlag der Übertragung in der erfindungsgemäßen Anordnung nur 0,2* 0,2* 0,2 = 0,008, also weniger als 1 %. Demnach würde nur jeder hundertste Test des Segments der Notlichtbeleuchtungsanlage 101 einen Übertragungsfehler aufweisen. Dabei wurden die Wahrscheinlichkeiten für Übertragungsprobleme zwischen den im Raum R1 befindlichen Hochfrequenzkommunikationsmodulen 136, 137 und 138 über die Kurzpfade KP1, KP2, KP3 als vernachlässigbar gegenüber möglichen Übertragungsproblemen durch eine Wand W angenommen. Durch die Nutzung von Kurzpfaden zwischen Hochfrequenzkommunikationsmodulen 136, 137, 138 im gleichen Raum R1 wird die Wahrscheinlichkeit der Übertragung zu einer leuchtenübergreifenden Einheit 117 auf mehr als 99 % gesteigert, obwohl die Einzelwahrscheinlichkeit der Übertragung jeweils, d. h. zwischen einem Hochfrequenzkommunikationsmodul 136, 137, 138 und einer leuchtenübergreifenden Einheit 117, nur bei 80 % liegt.

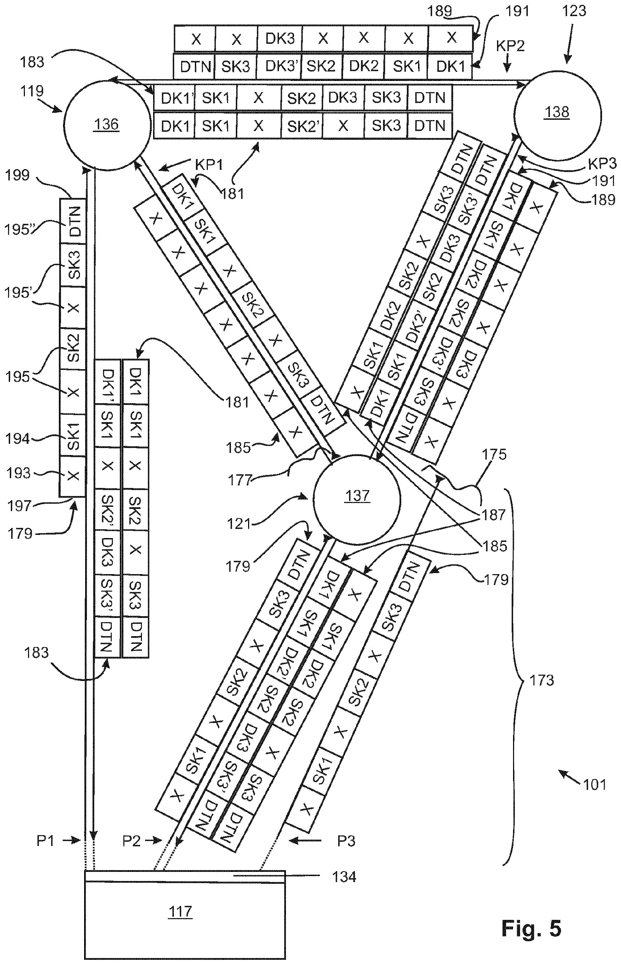

Die Wirkungsweise der Datenübertragung aus dem Segment der Notlichtbeleuchtungsanlage 101 in Figur 4 ist weitergehend in Figur 5 erläutert, wobei als eine Vereinfachung ein Beitrag des vierten Hochfrequenzkommunikationsmoduls 139 der vierten Leuchte 124 aus Figur 4 im Zusammenhang der Datenübertragung in Figur 5 nicht weiter diskutiert wird.

In Figur 5 ist schematisch ein Segment der Notlichtbeleuchtungsanlage 101 entsprechend Figur 4 gezeigt. In Figur 5 wird von der leuchtenübergreifenden Einheit 117 mit dem Hochfrequenzkommunikationsmodul 134 ein Übertragungstupel 179 ausgesendet, welches über den Kommunikationspfad P1 das erste Hochfrequenzkommunikationsmodul 136 der ersten Leuchte 119 und über den Pfad P2 das zweite Hochfrequenzkommunikationsmodul 137 der zweiten Leuchte 121 erreicht. Aufgrund einer Signalabschirmung 175 kann das Übertragungstupel 179 nicht über die Kommunikationspfadlänge 173 hinaus zu dem dritten Hochfrequenzkommunikationsmodul 138 der dritten Leuchte 123 vordringen. Das Übertragungstupel 179 in der Form eines Überwachungstupels weist eine erste Komponente 193, eine zweite Komponente 194 und eine Mehrzahl weiterer Komponenten 195, 195', 195" auf, die sequenziell in dem Übertragungstupel angeordnet sind. Jede Komponente 193, 194, 195, 195', 195" des Übertragungstupels 179 weist einen Aktualitätsstempel 197 auf, welcher insbesondere einen Zeitpunkt bestimmt, zu dem die Komponente des Übertragungstupels aktualisiert wurde. Die erste Komponente des Übertragungstupels 179 ist für die Aufnahme von Überwachungsdaten DK1, DK1' des ersten Hochfrequenzkommunikationsmoduls 136 vorgesehen, wie die entsprechenden weiteren ungeradzahligen Komponenten zur Aufnahme weiterer Überwachungsdaten DK2, DK2' und DK3, DK3' des Übertragungstupels 179 jeweils dem zweiten Hochfrequenzkommunikationsmodul 137 bzw. dem dritten Hochfrequenzkommunikationsmodul 138 zugeordnet sind. Die zweite Komponente 194 des Übertragungstupels 179 trägt die für das erste Hochfrequenzkommunikationsmodul 136 bestimmten Steuerdaten SK1. Entsprechend tragen die weiteren geradzahligen Komponenten des Übertragungstupels 179 Steuerbefehle in den Steuerdaten SK2, SK3, die jeweils für das zweite Hochfrequenzkommunikationsmodul131 bzw. das dritte Hochfrequenzkommunikationsmodul 138 bestimmt sind. Auch die Steuerdaten für die Leuchten 119, 121, 123 sind jeweils mit einem Aktualitätsstempel, wie dem Aktualitätsstempel 197, versehen. Die weiteren Daten des im übrigen nicht dargestellten Teils der Notlichtbeleuchtungsanlage sind ebenfalls in dem Übertragungstupel 179 dokumentiert, aber zur Vereinfachung der Darstellung in der letzten Komponente des Übertragungstupels 179 als weitere Daten DTN zusammengefasst. Eine Validitätsergänzung 199 des Übertragungstupels 179 dient der Kontrolle der Übertragungsqualität der Daten in den Komponenten des Übertragungstupels 179. Eine Kontrolle der Übertragungsqualität wird z. B. von dem Hochfrequenzkommunikationsmodul 136 ausgeführt. Das in diesem Beispiel gezeigte Zusammenfassen von Steuerdaten und Überwachungsdaten in ein gemeinsames, einheitliches Übertragungstupel führt zu einer besonders einfachen Implementierung des Hochfrequenzkommunikationsmoduls.

In einem möglichen Ausführungsbeispiel auf Grundlage von Figur 4 bzw. Figur 5 senden die Hochfrequenzkommunikationsmodule 136, 137 zeitlich nach dem Empfang des Übertragungstupels 179 mit Steuerdaten SK1, SK2, SK3 ein entsprechendes, identisches Übertragungstupel aus. Die Hochfrequenzkommunikationsmodule 136, 137, 138 arbeiten dabei als Repeater. Es erfolgt eine effiziente und schnelle Verbreitung von Steuerdaten, was beispielsweise zum Setzen einer Aktualitätsreferenz über die Hochfrequenzkommunikationsmodule 136, 137, 138 nützlich ist.

In einem anderen möglichen Ausführungsbeispiel wird nach Empfang des Übertragungstupels 179 ein erstes Überwachungstupel 181, 185, 189 von den Hochfrequenzkommunikationsmodulen 136, 137, 138 ausgesendet. Dazu wurde in der ersten Leuchte 119 auf Basis des Übertragungstupels 179 die erste Komponente nicht valider Daten X durch aktuelle Überwachungsdaten DK1 der ersten Leuchte 119 ersetzt und der Aktualitätsstempel197 sowie die Validitätsergänzung 199 ebenfalls aktualisiert. Das Überwachungstupel 181 erreicht das zweite Hochfrequenzkommunikationsmodul 137, das dritte Hochfrequenzkommunikationsmodul 138 und das Hochfrequenzkommunikationsmodul 134 der leuchtenübergreifenden Einheit 117. Vor dem Empfang des Überwachungstupels 181 des ersten Hochfrequenzkommunikationsmoduls 136 sendet das zweite Hochfrequenzkommunikationsmodul 137 ebenfalls ein erstes Überwachungstupel 185 aus, welchem die aktuellen Überwachungsdaten DK2 in der dritten Komponente, basierend auf dem Übertragungstupel 179, eingeschrieben sind. Die erste Komponente des ersten Überwachungstupels 185, welche dem ersten Hochfrequenzkommunikationsmodul 136 zugeordnet ist, enthält also immer noch nicht valide Daten X. Aufgrund einer vorübergehenden elektromagnetischen Signalstörung 177 erreicht das Überwachungstupel 185 von dem zweiten Hochfrequenzkommunikationsmodul 137 das erste Hochfrequenzkommunikationsmodul 136 nur mit nicht-validen Daten X in allen Komponenten, sodass das empfangene Überwachungstupel 185 im ersten Hochfrequenzkommunikationsmodul 136 verworfen wird. Allerdings wird das erste Überwachungstupel 185 des zweiten Hochfrequenzkommunikationsmoduls 137 sowohl von dem dritten Hochfrequenzkommunikationsmodul 138 als auch von dem Hochfrequenzkommunikationsmodul 134 in valider Form empfangen. Damit liegen die Überwachungsdaten DK2 der zweiten Leuchte 119 in dem dritten Hochfrequenzkommunikationsmodul 138 vor. Vor dem Empfang der ersten Überwachungstupel 182, 185 durch das dritte Hochfrequenzkommunikationsmodul 138 hat dieses bereits ein Überwachungstupel 189 ausgesendet, welches aufgrund der Tatsache, dass das Übertragungstupel 179 nicht empfangen wurde, nur einen validen Dateneintrag von Statusinformationen der dritten Leuchte 123 als Überwachungsdaten DK3 in der entsprechenden Komponente des ersten Überwachungstupels 189 enthält, dessen übrigen Komponenten mit nicht-validen Daten X beschrieben sind. Dieses erste Überwachungstupel 189 erreicht nur die Hochfrequenzkommunikationsmodule 136, 137, aber nicht das Hochfrequenzkommunikationsmodul 134 der leuchtenübergreifenden Einheit 117. Die Analyse des ersten Überwachungstupels 189 in den Hochfrequenzkommunikationsmodulen 136, 137 im Zusammenhang mit zwischengespeicherten Daten ergibt, dass ein Übertragungsproblem am dritten Hochfrequenzkommunikationsmodul 138 besteht. Diese Information wird in den zweiten Überwachungstupeln 183 und 187, welche von den Hochfrequenzkommunikationsmodulen 136, 137 ausgesendet werden, und zwar durch Aktualisierung der Komponente für die Steuerdaten SK3 zur dritten Leuchte 123 in Form von Steuerdaten SK3', eingeschrieben. Bei der Aussendung des zweiten Überwachungstupels 187 aus dem zweiten Hochfrequenzkommunikationsmoduls 137 sind dem Überwachungstupel 187 bereits alle aktuellen Überwachungsdaten der Leuchten 119, 121, 123 eingeschrieben. Die Überwachungsdaten DK2' der zweiten Leuchte 121 sind auf dem aktuellsten Stand. Zusätzlich wird mit dem Überwachungstupel 187 der leuchtenübergreifenden Einheit 117 anhand der Steuerdaten SK3' mitgeteilt, dass ein Übertragungsproblem zum dritten Hochfrequenzkommunikationsmodul 138 besteht. Das Empfangsproblem des ersten Überwachungstupels 185 durch das erste Hochfrequenzkommunikationsmodul 136 wurde als aktualisierter Steuerdatensatz SK2' im zweiten Überwachungstupel 183 des ersten Hochfrequenzkommunikationsmoduls 136 vermerkt, sodass diese Information ebenfalls der leuchtenübergreifenden Einheit 117, allerdings über den Kommunikationspfad P1, zugeht. Das Überwachungstupel 183 enthält aufgrund der elektromagnetischen Störung 177 keine Überwachungsdaten über die zweite Leuchte 119, aber die Überwachungsdaten DK1' der ersten Leuchte auf dem aktuellsten Stand. Die Überwachungsdaten DK2 erreichen das erste Kommunikationsmodul 136 erst über den Kurzpfad KP3 und den Kurzpfad KP2 mit dem zweiten Überwachungstupel 191, welches das dritte Hochfrequenzkommunikationsmodul 138 aussendet, und zwar zusammen mit einer Aktualisierung der Überwachungsdaten DK3' der dritten Leuchte 123. Somit kann der Datensatz DK2 erst in die entsprechende Komponente eines dritten Überwachungstupels (nicht dargestellt) des ersten Hochfrequenzkommunikationsmoduls 136 aufgenommen werden. Auf Grundlage von Figur 5 wird deutlich, wie schnell (und zuverlässig) sich aktuelle Informationen über die Notlichtbeleuchtungsanlage 101, insbesondere über die Leuchten 119, 121 und 123, ausbreiten. Nahezu ohne Zeitverlust erhält die leuchtenübergreifende Einheit 117 über mögliche Probleme der Kommunikation Mitteilung. Der zuverlässige Betrieb der Notlichtbeleuchtungsanlage 101 ist somit abgesichert. Offensichtlich ist auch, dass eine Übertragung ohne eine Initiierung durch die leuchtenübergreifende Einheit 117 bewerkstelligt werden kann. Die Hochfrequenzkommunikationsmodule 136, 137, 138 in den Leuchten 119, 121, 123 werden über einen Zeitgeber (nicht grafisch eingezeichnet) gesteuert, nur von ihren Betriebsparametern oder von Messwerten abhängig, Überwachungstupel 181, 183, 185, 187, 189, 191 senden. Ein zeitlich überlappendes Eintreffen, was einen Datenempfang aufgrund der Kollision unmöglich macht, von mehreren Überwachungstupeln 181, 185 bspw. am Hochfrequenzkommunikationsmodul 137 wird durch unterschiedliche Betriebsparameter und damit unterschiedlichen Zeitvorgaben der Zeitgeber verhindert. Die Zeitgeber arbeiten mit nichtäquidistanten, von den Betriebsparametern abhängigen Zeitabständen bei einer Widerholung des Sendens eines Übertragungstupels, um bei einer zufälligen Kollision diese bei der nächsten Widerholung zu vermeiden.

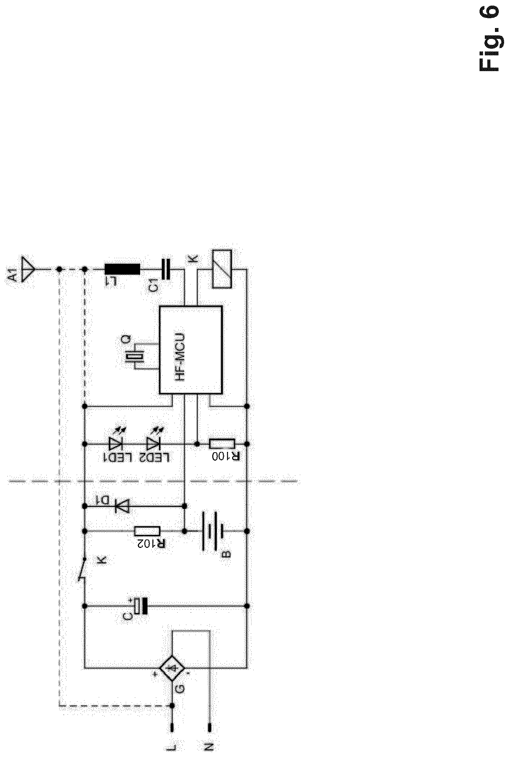

Figur 6 zeigt eine mögliche Schaltungsvariante für ein Hochfrequenzkommunikationsmodul, so wie zuvor in der Figur 1 als Hochfrequenzkommunikationsmodul 33, 34 oder 35 gezeigt. Die Schaltung nach Figur 6 umfasst eine Eingangsbaugruppe mit dem Anschluss für den Phasenleiter L und dem Nullleiter N, einem Gleichrichter G und einem Kondensator C für die Glättung der gleichgerichteten Spannung nach dem Gleichrichter G. Die Spannung kann über den Schaltkontakt des Relais K an die Funktionsbaugruppe mit dem Mikroprozessor HF-MCU weitergeleitet werden. Der Mikroprozessor HF-MCU erhält seine Taktung aus einem Quarz Q. Der Mikroprozessor HF-MCU steht mit einem Serienschwingkreis aus dem Kondensator C1 und der Spule L1 in elektrischer Verbindung, der auf die Antenne A1 geführt ist. Der Mikroprozessor HF-MCU kann die Leuchtmittel LED1, LED2 ansteuern. Hierzu ist ein PIN des Mikroprozessors HF-MCU auf den Widerstand R100 geführt. Der Widerstand R100 ist in Serie den Leuchtmitteln LED1, LED2 nachgeschaltet. Der Widerstand R102 dient als Ladungswiderstand für den Akkumulator B. Die Diode D1 kann elektrische Energie aus dem Akkumulator B dem Mikroprozessor HF-MCU zur Verfügung stellen, wenn keine Spannung über den Schaltkontakt des Relais K geführt ist. Als geeigneter Mikrokontroller HF-MCU könnte zum Beispiel der Si1010 des Hersteller Silicon Labs verwendet werden.

Die Schaltung nach Figur 6 wird durch eine Spannung versorgt, die an den Anschlüssen des Phasenleiters L und des Nullleiters N anliegt. Die Spannung kann zum Beispiel eine Spannung aus dem Versorgungsnetz sein. Mit Hilfe des Gleichrichters G und dem Kondensator C wird sichergestellt, dass eine Gleichspannung im Folgenden der Schaltung zur Verfügung steht. Die Spannung entspricht der Spitzenspannung aus dem Versorgungsnetz. Der Akkumulator B wird aus der Gleichspannung über den Widerstand R102 geladen. Ebenfalls aus der Gleichspannung wird das aus zwei LEDs (LED1, LED2) bestehende Leuchtmittel versorgt. Die LEDs LED1, LED2 sind weiße Leuchtdioden. Der elektrische Strom durch die LEDs LED1, LED2 wird durch den Widerstand R2 begrenzt. Wird eine Ladeschlussspannung gewählt, die zwischen 60 % und 85 % der nominellen Spannung des Akkumulators B angesiedelt ist, und sinkt die Gleichspannung an dem Mikrokontroller HF-MCU unter einen festgelegten Grenzwert, so kann das Leuchtmittel, die LEDs LED1 und LED2, aus dem Akkumulator über die Diode D1 versorgt werden. Der Mikrokontroller HF-MCU ist ein Mikrokontroller mit einem Analog-Digital-Wandler und einem RF-Modul (radio-frequency-Modul). Als Bezugspotenzial wird der Minuspol des Akkumulators B genommen. In einer alternativen Ausgestaltung kann die Energieversorgung für den Mikrokontroller HF-MCU über einen DC-DC-Wandler aus dem Anodenpotenzial der LED1 erfolgen (nicht dargestellt). Mit den drei in der Figur 6 zu sehenden Anschlüssen an dem Mikrokontroller HF-MCU (3-Pinne), wobei Anschlüsse des Mikrokontroller HF-MCU gewählt werden, die auf den Analog-Digital-Wandler geführt sind, kann der Mikrokontroller den tatsächlichen Wert der Gleichspannung, die Spannung des Akkumulators B und den Strom durch das Leuchtmittel aus LED1 und LED2 anhand der Spannung an dem Widerstand R100 messen. In einem Berechnungsschritt können Spannungsdifferenzen in dem Mikrokontroller HF-MCU ermittelt werden. Die Spannungsdifferenzen dienen dazu, den Ladestrom für den Akkumulator B und die Spannung über das Leuchtmittel (LED1, LED2) zu bestimmen. Werden so Werte gemessen und berechnet, die außerhalb eines Toleranzbandes liegen, so meldet der Mikrokontroller über die Antenne A1 diesen Fehler an andere, insbesondere gleichartige Netzknotenpunkte. In Reaktion darauf kann der Mikrokontroller HF-MCU einen Betrieb der Schaltung aus der Akkumulator B durch ein Umschalten des Relais K erzwingen. Auch kann ein Kapazitätstest des Akkumulators B durchgeführt werden. Das Signal für die Übertragung als Hochfrequenzsignal wird über den auf das Funkübertragungsfrequenzband abgestimmten Bandpass-Filter aus Kondensator C1 und Spule L1 an die Antenne A1 weitergeleitet. In einer weiteren Möglichkeit kann das Signal auch über die gestrichelt eingezeichneten Verbindungen an andere Stellen der Schaltung weitergeleitet werden. Der Quarz Q dient als Taktgeber bzw. als Taktung im Sinne einer Frequenzbasis für das Frequenzband. Der Quarz kann auch als Zeitbasis für den Aktualitätsstempel bzw. Tourenzähler 43 (siehe Figur 2) genutzt werden.

Die Schaltung nach Figur 5 kann einstückig oder aufgeteilt auf mehrere Gehäuse in einer Notlichtbeleuchtungsanlage 1, 101 (siehe Figuren 1 und 5) verbaut sein. Befindet sich eine Schaltung nach Figur 5 vollständig in einer Leuchte wie in der Leuchte 24 (siehe Figur 2), so kann die Leuchte 24 als "Einzelbatterie-Leuchte" eingesetzt werden (sie wird auch als "selfcontained" bezeichnet). Ist in einer Leuchte, wie der Leuchte 23 (siehe Figur 1), nur der Schaltungsteil vorhanden, der rechts des senkrechten Strichs in der Schaltung nach Figur 5 dargestellt ist, und ist der Schaltungsteil nach Figur 5, der links des senkrechten Strichs in der Schaltung nach Figur 5 dargestellt ist, zentralisiert angeordnet, so wird von einer zentral- oder gruppenbatterieversorgten Notlichtbeleuchtungsanlage gesprochen. Solche Notlichtbeleuchtungsanlagen werden auch als CPS (Central Power Supply) oder LPS (Low Power Supply) bezeichnet.

Aus dem Schaltbild der Figur 3 kann auch die Funkübertragung über die Antenne A1 herausgelesen werden. In einer alternativen Ausgestaltung können Schnittstellen an dem Mikrokontroller HF-MCU angeschlossen werden. Solche Schnittstellen sind z. B. ein http-Protokollkonverter, eine Internet-, eine Intranet-, eine Modbus-, eine BACNET- und/oder eine LON-Anbindung. Zusätzlich kann ein Transformator (nicht dargestellt) vor dem Gleichrichter G eingebaut sein. Ein weiteres Relais (nicht dargestellt) kann in der Schaltung nach Figur 5 eingebaut sein. Damit lassen sich Leuchtmittel LED1, LED2 steuern. Zusätzlich kann (nicht dargestellt) ein Relais in der Schaltung nach Figur 5 eingebaut werden, um einen Tiefentladungsschutz für den Akkumulator B zu realisieren, dies in Abhängigkeit des Akkumulatortyps (Pb, NiCd, NiMh, LiFePO4, Lilon oder Lilon-[Hybrid-]Kondensator).

In Figur 5 sind LEDs LED1, LED2 als Leuchtmittel dargestellt. Weitere mögliche Leuchtmittel sind Glühlampen, CCFLs, organische LEDs, RGB-LEDs und blaue LEDs mit beabstandeten Phosphor (Weißlichterzeugung). Auch kann in der Schaltung nach Figur 5 ein Transistor eingebaut werden, um Stromflüsse zu steuern oder zu minimieren.

Das Hochfrequenzkommunikationsmodul nach Figur 5 kann als Nachrüstsatz, z. B. als Einsteckmodul, ausgestaltet für bisher übliche Leuchten in Notlichtbeleuchtungsanlagen sein.

Ist das Leuchtengehäuse aus Metall oder Kunststoff gefertigt, so haben Versuche ergeben, dass bei einem Frequenzband um 868 MHz nur eine vernachlässigbare Dämpfung auftritt.

Die grafisch gezeigten Ausgestaltungsmöglichkeiten lassen sich auch mit den weiteren verbal dargestellten Aspekten untereinander in beliebiger Form verbinden.

### Bezugszeichenliste

- 1, 101: Notlichtbeleuchtungsanlage
- 3: Gebäude
- 5: Betonwanne
- 7: Fluchtflur
- 9: Brandabschnitt I
- 10: Brandabschnitt III
- 11: Brandabschnitt II
- 13: Zentraleinheit
- 15: Synchronisationsmodul
- 17, 117: erste leuchtenübergreifende Einheit
- 18: zweite leuchtenübergreifende Einheit
- 19, 119: erste Leuchte
- 21, 121: zweite Leuchte
- 23, 123: dritte Leuchte
- 24, 124: vierte Leuchte
- 29: Repeater
- 30: Energieversorgung, insbesondere Akkumulator
- 31: Energieversorgung
- 32: Leuchtenüberwachung
- 33: Hochfrequenzkommunikationsmodul, insbesondere der Zentraleinheit
- 34, 134: Hochfrequenzkommunikationsmodul, insbesondere der leuchtenübergreifenden Einheit
- 35: Hochfrequenzkommunikationsmodul, insbesondere eines Repeaters
- 36, 136: erstes Hochfrequenzkommunikationsmodul
- 37, 137: zweites Hochfrequenzkommunikationsmodul
- 38, 138: drittes Hochfrequenzkommunikationsmodul
- 39, 139: viertes Hochfrequenzkommunikationsmodul
- 40, 40', 40": Übertragungsbaugruppe
- 41: Zwischenspeicher
- 42: Aktualitätsreferenz, insbesondere Aktualitätsstempel
- 43: Tourenzähler, Modulo-Zähler, insbesondere Aktualitätsstempel
- 45: Antenne
- 46, 46': Antenne
- 47: Kontrolleinheit
- 49: Verstärkereinheit
- 50: Kontrolleinheit
- 51: Vorschaltgerät
- 53: Messeinheit
- 54: Messeinheit
- 55: Empfangseinheit
- 57: Sendeeinheit
- 59: Modenumschalter
- 61: Leuchtmittel
- 71: Kommunikationseinheit
- 173: Kommunikationspfadlänge, insbesondere Strecke
- 175: Signalabschirmung
- 177: Signalstörung
- 179: Übertragungstupel insbesondere Überwachungstupel
- 181: erstes Überwachungstupel, insbesondere des ersten Hochfrequenzkommunikationsmoduls
- 183: zweites Überwachungstupel, insbesondere des ersten Hochfrequenzkommunikationsmoduls
- 185: erstes Überwachungstupel, insbesondere des zweiten Hochfrequenzkommunikationsmoduls
- 187: zweites Überwachungstupel, insbesondere des zweiten Hochfrequenzkommunikationsmoduls
- 189: erstes Überwachungstupel, insbesondere des dritten Hochfrequenzkommunikationsmoduls
- 191: zweites Überwachungstupel, insbesondere des dritten Hochfrequenzkommunikationsmoduls
- 193: erste Komponente des Übertragungstupels, insbesondere eines Überwachungstupels
- 194: zweite Komponente des Übertragungstupels, insbesondere eines Überwachungstupels
- 195, 195', 195": Komponente
- 197: Aktualitätsstempel
- 199: Validitätsergänzung

- R1: erster Raum
- R2: zweiter Raum
- W: Wand
- M: Menschengruppe
- P1: Kommunikationspfad
- P2: Kommunikationspfad
- P3: Kommunikationspfad
- KP1: Kurzpfad
- KP2: Kurzpfad
- KP3: Kurzpfad
- DK1, DK1': Überwachungsdaten erste Leuchte
- DK2, DK2': Überwachungsdaten zweite Leuchte
- DK3, DK3': Überwachungsdaten dritte Leuchte
- SK1: Steuerdaten erste Leuchte
- SK2, SK2': Steuerdaten zweite Leuchte
- SK3, SK3': Steuerdaten dritte Leuchte
- DTN: weitere Daten
- X: nicht valide Daten, insbesondere negative Überwachungsdaten
- A1: Antenne, insbesondere eines Hochfrequenzkommunikationsmoduls
- L: Phasenleiter
- N: Nullleiter
- G: Gleichrichter
- C: Kondensator, insbesondere Elektrolytkondensator als Glättungskondensator
- C1: Kondensator, insbesondere als Bandpassfilterkondensator
- K: Relais
- L1: Spule, insbesondere als Bandpassfilterspule
- D1: Diode
- B: Akkumulator, insbesondere einer Leuchte
- LED1: erste LED
- LED": zweite LED
- Q: Quarz, insbesondere als Taktgeber
- HF-MCU: Mikroprozessor des Hochfrequenzkommunikationsmoduls
- R100: erster Widerstand, insbesondere Strombegrenzungswiderstand
- R102: zweiter Widerstand, insbesondere Ladungsstrombegrenzer

- 187: zweites Überwachungstupel, insbesondere des zweiten Hochfrequenzkommunikationsmoduls
- 189: erstes Überwachungstupel, insbesondere des dritten Hochfrequenzkommunikationsmoduls
- 191: zweites Überwachungstupel, insbesondere des dritten Hochfrequenzkommunikationsmoduls
- 193: erste Komponente des Übertragungstupels, insbesondere eines Überwachungstupels
- 194: zweite Komponente des Übertragungstupels, insbesondere eines Überwachungstupels
- 195, 195', 195": Komponente
- 197: Aktualitätsstempel
- 199: Validitätsergänzung

- R1: erster Raum
- R2: zweiter Raum
- W: Wand
- M: Menschengruppe
- P1: Kommunikationspfad
- P2: Kommunikationspfad
- P3: Kommunikationspfad
- KP1: Kurzpfad
- KP2: Kurzpfad
- KP3: Kurzpfad
- DK1, DK1': Überwachungsdaten erste Leuchte
- DK2, DK2': Überwachungsdaten zweite Leuchte

- DK3, DK3': Überwachungsdaten dritte Leuchte
- SK1: Steuerdaten erste Leuchte
- SK2, SK2': Steuerdaten zweite Leuchte
- SK3, SK3': Steuerdaten dritte Leuchte
- DTN: weitere Daten
- X: nicht valide Daten, insbesondere negative Überwachungsdaten
- A1: Antenne, insbesondere eines Hochfrequenzkommunikationsmoduls
- L: Phasenleiter
- N: Nullleiter
- G: Gleichrichter
- C: Kondensator, insbesondere Elektrolytkondensator als Glättungskondensator
- C1: Kondensator, insbesondere als Bandpassfilterkondensator
- K: Relais
- L1: Spule, insbesondere als Bandpassfilterspule
- D1: Diode
- B: Akkumulator, insbesondere einer Leuchte
- LED1: erste LED
- LED": zweite LED
- Q: Quarz, insbesondere als Taktgeber
- HF-MCU: Mikroprozessor des Hochfrequenzkommunikationsmoduls
- R100: erster Widerstand, insbesondere Strombegrenzungswiderstand
- R102: zweiter Widerstand, insbesondere Ladungsstrombegrenzer

## Patentansprüche

1. Notlichtbeleuchtungsanlage (1, 101), umfassend
eine leuchtenübergreifende Einheit (13, 17, 18; 117),
mehrere Hochfrequenzkommunikationsmodule (33, 34, 35, 36, 37, 38, 39; 134, 136, 137, 138, 139),
und mehrere Leuchten (19, 21, 23, 24; 119, 121, 123, 124), wobei diese Leuchten (19, 21, 23, 24; 119, 121, 123, 124) jeweils einem Hochfrequenzkommunikationsmodul (33, 34, 35, 36, 37, 38, 39; 134, 136, 137, 138, 139) zugeordnet sind und mittels der leuchtenübergreifenden Einheit (13, 17, 18; 117), die eines der mehreren Hochfrequenzkommunikationsmodule umfasst, zu überwachen sind,
wobei die Hochfrequenzkommunikationsmodule jeweils für die Übertragung von Daten (DK1, DK1', SK1; DK2, DK2', SK2, SK2'; DK3, DK3', SK3, SK3'; DTN) der Leuchten (19, 21, 23, 24; 119, 121, 123, 124) an die leuchtenübergreifende Einheit (13, 17, 18; 117) bestimmt sind,
**dadurch gekennzeichnet, dass**
jeweils ein Hochfrequenzkommunikationsmodul in jeweils einer Leuchte integriert ist, wobei die Hochfrequenzkommunikationsmodule wie folgt ausgelegt sind:
a) Fremddaten (DK2, DK2', SK2, SK2'; DK3, DK3', SK3, SK3'; DTN) von anderen Leuchten (21,23,24; 121, 123, 124) aufzufangen;
b) Kombinierer von eigenen Daten (DK1, DK1', SK1) und Fremddaten (DK2, DK2', SK2, SK2'; DK3, DK3', SK3, SK3'; DTN) von anderen Leuchten (21, 23, 24; 121, 123, 124) zu sein,
c) ein Überwachungstupel (179, 181, 183, 185, 187, 189, 191) zu bilden, das sowohl die eigenen Daten (DK1, DK1', SK1) der eigenen Leuchte (19; 119) als auch die Fremddaten (DK2, DK2', SK2, SK2'; DK3, DK3', SK3, SK3'; DTN) anderer Leuchten (21, 23, 24; 121, 123, 124) beinhaltet,
wobei Daten (DK1, DK1', SK1; DK2, DK2', SK2, SK2'; DK3, DK3', SK3, SK3'; DTN) des Überwachungstupels analysiert werden, in einem Zwischenspeicher (41) abgelegt werden, hierbei fehlerbehaftete Überwachungsdaten (X) durch verwertbare Überwachungsdaten (DK1, DK1'; DK2, DK2'; DK3, DK3'; DTN) ersetzbar sind und ein so aktualisiertes Überwachungstupel gebildet wird,
d) die Daten (DK1, DK1', SK1; DK2, DK2', SK2, SK2'; DK3, DK3', SK3, SK3'; DTN) durch ein wiederholtes Senden als aktualisiertes Überwachungstupel gemeinsam zur Verarbeitung an die leuchtenübergreifende Einheit über das dieser leuchtenübergreifenden Einheit zugeordnete Hochfrequenzkommunikationsmodul zu übertragen.

2. Notlichtbeleuchtungsanlage (1, 101) nach Anspruch 1,
**dadurch gekennzeichnet, dass**
die Notlichtbeleuchtungsanlage (1, 101) eine leuchtenübergreifende Leuchtenüberwachung (32) umfasst.

3. Notlichtbeleuchtungsanlage (1, 101) nach Anspruch 1 oder 2,
**dadurch gekennzeichnet, dass**
die Überwachungsdaten (DK2, DK2', SK2, SK2'; DK3, DK3', SK3, SK3'; DTN; DK1, DK1', SK1) mittels einer Übertragungsbaugruppe (40, 40', 40") empfangen und in einem Zwischenspeicher abgelegt werden.

4. Notlichtbeleuchtungsanlage (1, 101) nach einem der vorhergehenden Ansprüche,
**dadurch gekennzeichnet, dass**
die Notlichtbeleuchtungsanlage (1, 101) eine Anlage mit einer integrierten Energieversorgung (30, 31) wie einer Zentralbatterieanlage, einer Gruppenbatterieanlage oder mit mehreren über die Notlichtbeleuchtungsanlage (1, 101) verteilte Akkumulatoren (30, 31) ist, durch die, insbesondere mittels einem Umschaltglied, eine leitungsgebundene Energieversorgung (30, 31) der Leuchtmittel (61) der Leuchten (19, 21, 23, 24, 119, 121, 123, 124) stattfindet, wenn eine Netzspannungsversorgung, die vorzugsweise durch einen Netzspannungswächter zu prüfen ist, innerhalb von Mindestgütegrenzen wie einer eingehaltenen Scheitelspannung von 60 % oder 85 % fehlt.

5. Notlichtbeleuchtungsanlage (1, 101) nach einem der vorhergehenden Ansprüche,
**dadurch gekennzeichnet, dass**
die Notlichtbeleuchtungsanlage (1, 101) für eine Datenkommunikation wenigstens einen Repeater (29; 19,21,23,24; 119, 121, 123, 124; 17, 18, 117) mit einem Hochfrequenzkommunikationsmodul (35, 33, 34, 36, 37, 38, 39; 134, 136, 137, 138, 139) umfasst.

6. Notlichtbeleuchtungsanlage (1, 101) nach einem der vorhergehenden Ansprüche,
**dadurch gekennzeichnet, dass**
die Überwachungsdaten (DK1, DK1', SK1; DK2, DK2', SK2, SK2'; DK3, DK3', SK3, SK3', DTN) mit einem Aktualitätsstempel (197) ausgestattet sind, insbesondere in einem Hochfrequenzkommunikationsmodul (35, 37) ein Zwischenspeicher (41) für einen Aktualitätsstempel (42, 43, 197) vorhanden ist, durch den ein zugehöriger Datensatz (DK1, DK1', SK1; DK2, DK2', SK2, SK2'; DK3, DK3', SK3, SK3', DTN), insbesondere durch ein Bewertungsglied (47, 50), als einbindbar in den Überwachungstupel (179, 181, 183, 185, 187, 189, 191) qualifiziert wird und insbesondere eine Validitätsergänzung (199) umfasst.

7. Notlichtbeleuchtungsanlage (1, 101) nach einem der vorhergehenden Ansprüche,
**dadurch gekennzeichnet, dass**
die zumindest teilweise in einem Zwischenspeicher (41) abgelegten Überwachungsdaten (DK1, DK1', SK1; DK2, DK2', SK2, SK2'; DK3, DK3', SK3, SK3', DTN) anschließend zeitversetzt und insbesondere wiederholt versendet werden.

8. Notlichtbeleuchtungsanlage (1, 101) nach einem der vorhergehenden Ansprüche 6 oder 7,
**dadurch gekennzeichnet, dass**
eine Validität durch Empfangspegel und/oder eine Prüfsumme attestiert wird.

9. Notlichtbeleuchtungsanlage (1, 101) nach einem der vorhergehenden Ansprüche,
**dadurch gekennzeichnet, dass**
das Überwachungstupel (179, 181, 183, 185, 187, 189, 191) über zumindest ein weiteres Hochfrequenzkommunikationsmodul (33, 34, 35, 36, 37, 38, 39, 134, 136, 137, 138, 139) an die leuchtenübergreifende Einheit (13, 17, 18; 117) weitergeleitet wird, wobei insbesondere in dem Überwachungstupel (179, 181, 183, 185, 187, 189, 191) fehlerbehaftete Überwachungsdaten (X) durch verwertbare Überwachungsdaten (DK1, DK1', SK1; DK2, DK2', SK2, SK2'; DK3, DK3', SK3, SK3', DTN) aus einer an das Hochfrequenzkommunikationsmodul (33, 34, 35, 36, 37, 38, 39, 134, 136, 137, 138, 139) angeschlossenen Leuchte (19, 21, 23, 24, 119, 121, 123, 124) und/oder aus anderen verwertbaren zwischengespeicherten Überwachungstupeln (181, 183, 185, 187, 189, 191, 179) ersetzt wurden.

10. Notlichtbeleuchtungsanlage (1, 101) nach einem der vorhergehenden Ansprüche,
**dadurch gekennzeichnet, dass**
wenigstens eines der Hochfrequenzkommunikationsmodule (33, 34, 35, 36, 37, 38, 39, 134, 136, 137, 138, 139), vorzugsweise mit wenigstens zwei unterschiedlichen Modi (59) ausgestattet ist, einem Empfangsmodus (55) und einem Sendemodus (57), die meiste Betriebszeit in einem Empfangsmodus (55) und hierzu im Vergleich weniger Zeit in einem Sendemodus (57) verweilt, insbesondere sich weniger als 0,9 % der Betriebszeit im Sendemodus (57) befindet.

11. Notlichtbeleuchtungsanlage (1, 101) nach einem der vorhergehenden Ansprüche 6 bis 10,
**dadurch gekennzeichnet, dass**
der Aktualitätsstempel (42, 43, 197) durch eine Zentraleinheit (13), insbesondere durch eine wiederkehrend auftretende Funkübertragung, für eine Gruppe von Hochfrequenzkommunikationsmodulen (35, 37) oder für alle Hochfrequenzkommunikationsmodule (35, 37) synchronisiert wird, insbesondere in der leuchtenübergreifenden Einheit ein Synchronisationsmodul (15) mit einem Sequenzgenerator vorhanden ist, der die Aktualitätsstempel vorgibt.

12. Notlichtbeleuchtungsanlage (1, 101) nach einem der vorhergehenden Ansprüche,
**dadurch gekennzeichnet, dass**
die Hochfrequenzkommunikationsmodule (33, 34, 35, 36, 37, 38, 39, 134, 136, 137, 138, 139), vorzugsweise mit einem Frequenzgenerator, in einem Frequenzband zwischen 140 kHz und 10 GHz, vorzugsweise in einem Frequenzband zwischen 868 MHz und 870 MHz, insbesondere über eine Funkverbindung, oder in einem Frequenzband von 140 kHz bis 150 kHz, insbesondere über für die Datenkommunikation zu nutzende Leitungen, senden und empfangen.

13. Notlichtbeleuchtungsanlage (1, 101) nach einem der vorhergehenden Ansprüche,
**dadurch gekennzeichnet, dass**
ein Bauteil wenigstens einer Leuchte (19, 21, 23, 24, 119, 121, 123, 124) ein Hochfrequenzkommunikationsmodul (36, 37, 38, 39, 136, 137, 138, 139) umfasst, und insbesondere ein Gehäusebauteil oder ein Rahmenbauteil, wie eine Halterung oder eine Strebe der Leuchte (19, 21, 23, 24, 119, 121, 123, 124), eine Antenne (45, 46, 46') des Hochfrequenzkommunikationsmoduls (36, 37, 38, 39, 136, 137, 138, 139) ist.

14. Notlichtbeleuchtungsanlage (1, 101) nach einem der vorhergehenden Ansprüche,
**dadurch gekennzeichnet, dass**
ein erstes Hochfrequenzkommunikationsmodul (33, 34, 35, 36, 37, 38, 39, 134, 136, 137, 138, 139) eine Verstärkereinheit (49) für die Übertragung eines von einem zweiten Hochfrequenzkommunikationsmodul (34, 35, 36, 37, 38, 39, 134, 136, 137, 138, 139, 33) gesendeten Signals eines Überwachungstupels (179, 181, 183, 185, 187, 189, 191) mit einer rauschbehafteten Empfangsintensität in einer im Vergleich zur Empfangsintensität verstärkten Sendeintensität des ersten Hochfrequenzkommunikationsmoduls (33, 34, 35, 36, 37, 38, 39, 134, 136, 137, 138, 139) umfasst, wobei insbesondere eine mit der Verstärkereinheit (49) verbundene Kontrolleinheit (47, 50) das Signal zwischenspeichert und auf Übertragungsfehler (X) prüft und bei Abweichung von einem Sollwert, wie ein Messwert einer Messeinheit (53, 54) einer Leuchte (19, 21, 23, 24, 119, 121, 123, 124) oder ein Datenwert (DK1, DK1', SK1; DK2, DK2', SK2, SK2'; DK3, DK3', SK3, SK3', DTN) eines Zwischenspeichers (41), aktualisiert.

15. Notlichtbeleuchtungsanlage (1, 101) nach einem der vorhergehenden Ansprüche,
**dadurch gekennzeichnet, dass**
die Leuchte (19, 21, 23, 24, 119, 121, 123, 124) ein Vorschaltgerät (51) umfasst, das zur elektrischen Versorgung der Leuchtmittel (61), wie LEDs, und des Hochfrequenzkommunikationsmoduls (36, 37, 38, 39, 136, 137, 138, 139) mit einem versorgungsgemäßen Spannungsniveau eingesetzt ist und insbesondere eine Leistung der Übertragungsbaugruppe (40", 41, 43, 45, 47, 49, 53) weniger als 20 % einer Nennleistung der Leuchte (19, 21, 23, 24, 119, 121, 123, 124) beträgt.

16. Notlichtbeleuchtungsanlage (1, 101) nach einem der vorhergehenden Ansprüche,
**dadurch gekennzeichnet, dass**
sich die Notlichtbeleuchtungsanlage (1, 101) aus mehreren, disjunktiv verknüpften Subsystemen von Notlichtbeleuchtungsanlagen (1, 101) zusammensetzt.

17. Notlichtbeleuchtungsanlage (1, 101) nach einem der vorhergehenden Ansprüche,
**dadurch gekennzeichnet, dass**
ein erstes Hochfrequenzkommunikationsmodul (36, 37, 38, 39, 136, 137, 138, 139) und ein zweites Hochfrequenzkommunikationsmodul (36, 37, 38, 39, 136, 137, 138, 139) zeitweise nicht überlappend senden, insbesondere zu zwei unterschiedlichen Zeitpunkten senden, indem die Hochfrequenzkommunikationsmodule (36, 37, 38, 39, 136, 137, 138, 139) den Sendezeitpunkt aus zumindest einem Betriebsparameter oder Messwert bestimmen, der den beiden Hochfrequenzkommunikationsmodulen (36, 37, 38, 39, 136, 137, 138, 139) zu eigen ist, wie eine Gerätenummer, ein Inbetriebnahmezeitpunkt des Hochfrequenzkommunikationsmoduls, eine Oszillatorfrequenz oder ein Empfangspegel.

18. Datenübermittlungsverfahren einer Notlichtbeleuchtungsanlage (1, 101),
die mehrere Leuchten (19, 21, 23, 24; 119, 121, 123, 124)
und mehrere Hochfrequenzkommunikationsmodule (33, 34, 35, 36, 37, 38, 39, 134, 136, 137, 138, 139) umfasst,
**dadurch gekennzeichnet, dass**
eines der Hochfrequenzkommunikationsmodule (33, 34, 35, 36, 37, 38, 39, 134, 136, 137, 138, 139) während eines Zeitraums auf Datenempfang steht,
in diesem Zeitraum empfangene Daten (DK1, DK1', SK1; DK2, DK2', SK2, SK2'; DK3, DK3', SK3, SK3', DTN, X) zwischenspeichert,
fehlerbehaftete Überwachungsdaten (X) durch verwertbare Überwachungsdaten (DK1, DK1', SK1; DK2, DK2', SK2, SK2'; DK3, DK3', SK3, SK3', DTN) aus einer an das Hochfrequenzkommunikationsmodul (33, 34, 35, 36, 37, 38, 39; 134, 136, 137, 138, 139) angeschlossenen Leuchte (19, 21, 23, 24; 119, 121, 123, 124) und/oder aus anderen verwertbaren zwischengespeicherten Daten (DK1, DK1', SK1; DK2, DK2', SK2, SK2'; DK3, DK3', SK3, SK3', DTN) ersetzt und
diese aktualisierten Daten anschließend als ein Überwachungstupel (179, 181, 183, 185, 187, 189, 191) über zumindest ein weiteres Hochfrequenzkommunikationsmodul (35, 36, 37, 38, 39, 34; 136, 137, 138, 139, 134) an eine leuchtenübergreifende Einheit (13, 17, 18; 117) durch wiederholtes Senden übertragen werden.

19. Datenübermittlungsverfahren einer Notlichtbeleuchtungsanlage (1, 101) nach Anspruch 18, **dadurch gekennzeichnet, dass**
die verwertbaren, zwischengespeicherten Daten (DK1, DK1', SK1; DK2, DK2', SK2, SK2'; DK3, DK3', SK3, SK3', DTN) während eines Zeitraums, der kürzer ist als der Zeitraum des Datenempfangs, als ein Überwachungstupel (179, 181, 183, 185, 187, 189, 191) ausgesendet werden.

20. Datenübermittlungsverfahren einer Notlichtbeleuchtungsanlage (1, 101) nach einem der vorhergehenden Ansprüche 18 bis 19, **dadurch gekennzeichnet, dass** das Hochfrequenzkommunikationsmodul (17, 18; 117) eine Aktualitätsüberprüfung, insbesondere anhand von einem oder mehreren Aktualitätsstempeln (42, 43, 197), der zwischengespeicherten Daten (DK1, DK1', SK1; DK2, DK2', SK2, SK2'; DK3, DK3', SK3, SK3', DTN, X) durchführt und
bei akzeptierter Aktualität eine logische Verknüpfung der Daten (DK1, DK1', SK1; DK2, DK2', SK2, SK2'; DK3, DK3', SK3, SK3', DTN, X) durchführt, um hieraus ein Überwachungstupel (179, 181, 183, 185, 187, 189, 191), insbesondere zur Übermittlung von Steuerdaten (SK1, SK2, SK2', SK3, SK3', DTN) und/oder Kontrolldaten (DK1, DK1', DK2, DK2', DK3, DK3', DTN) von einer ersten Notlichtleuchte (19, 21, 23, 24; 119, 121, 123, 124) an eine zweite Notlichtleuchte (21, 23, 24, 19; 121, 123, 124, 119) oder einen Repeater (29, 19, 21, 23, 24, 119, 121, 123, 124; 17, 18; 117), zu bilden.

## Claims

1. An emergency lighting system (1, 101), comprising
a luminaire-spanning unit (13, 17, 18; 117),
a plurality of high-frequency communication modules (33, 34, 35, 36, 37, 38, 39; 134, 136, 137, 138, 139),
and a plurality of luminaires (19, 21, 23, 24; 119, 121, 123, 124), these luminaires (19, 21, 23, 24; 119, 121, 123, 124) being in each case assigned to a high-frequency communication module (33, 34, 35, 36, 37, 38, 39; 134, 136, 137, 138, 139) and having to be monitored by means of the luminaire-spanning unit (13, 17, 18; 117) that comprises one of the plurality of high-frequency communication modules,
the high-frequency communication modules in each case being intended for the transmission of data (DK1, DK1', SK1; DK2, DK2', SK2, SK2'; DK3, DK3', SK3, SK3'; DTN) of the luminaires (19, 21, 23, 24; 119, 121, 123, 124) to the luminaire-spanning unit (13, 17, 18; 117),
**characterized in that**
in each case a high-frequency communication module being integrated into in each case a luminaire, the high-frequency communication modules being designed as follows:
a) to capture external data (DK2, DK2', SK2, SK2'; DK3, DK3', SK3, SK3'; DTN) from other luminaires (21, 23, 24; 121, 123, 124);
b) to be combiners of own data (DK1, DK1', SK1) and external data (DK2, DK2', SK2, SK2'; DK3, DK3', SK3, SK3'; DTN) from other luminaires (21, 23, 24; 121, 123, 124),
c) to form a monitoring tupel (179, 181, 183, 185, 187, 189, 191) that contains both the own data (DK1, DK1', SK1) of the own luminaire (19; 119) and the external data (DK2, DK2', SK2, SK2'; DK3, DK3', SK3, SK3'; DTN) of other luminaires (21, 23, 24; 121, 123, 124),
data (DK1, DK1', SK1; DK2, DK2', SK2, SK2'; DK3, DK3', SK3, SK3'; DTN) of the monitoring tupel being analyzed, stored in a buffer memory (41), in the process faulty monitoring data (X) being replaceable by usable monitoring data (DK1, DK1'; DK2, DK2'; DK3, DK3'; DTN) and a thus updated monitoring tupel being formed,
d) to transmit the data (DK1, DK1', SK1; DK2, DK2', SK2, SK2'; DK3, DK3', SK3, SK3'; DTN) by repeatedly sending as updated monitoring tupel together for processing to the luminaire-spanning unit via the high-frequency communication module assigned to this luminaire-spanning unit.

2. The emergency lighting system (1, 101) according to Claim 1, **characterized in that** the emergency lighting system (1, 101) comprises a luminaire-spanning luminaire-monitoring system (32).

3. The emergency lighting system (1, 101) according to Claim 1 or 2, **characterized in that**
the monitoring data (DK2, DK2', SK2, SK2'; DK3, DK3', SK3, SK3'; DTN; DK1, DK1', SK1) are received by means of a transmission assembly (40, 40', 40") and are stored in a buffer memory.

4. The emergency lighting system (1, 101) according to one of the preceding claims, **characterized in that**
the emergency lighting system (1, 101) is a system having an integrated energy supply (30, 31) such as a central-battery system, a group-battery system or having a plurality of storage batteries (30, 31) distributed across the emergency lighting system (1, 101), by means of which, in particular via a switching member, a conducted energy supply (30, 31) of the lamps (61) of the luminaires (19, 21, 23, 24, 119, 121, 123, 124) takes place in case there is a lack of a line-voltage supply, preferably to be checked by means of a line-voltage monitor, inside of minimum quality limits such as a complied-with peak voltage of 60% or 85%.

5. The emergency lighting system (1, 101) according to one of the preceding claims, **characterized in that**
the emergency lighting system (1, 101) comprises for data communication at least one repeater (29; 19, 21, 23, 24; 119, 121, 123, 124; 17, 18, 117) having a high-frequency communication module (35, 33, 34, 36, 37, 38, 39; 134, 136, 137, 138, 139).

6. The emergency lighting system (1, 101) according to one of the preceding claims, **characterized in that**
the monitoring data (DK1, DK1', SK1; DK2, DK2', SK2, SK2'; DK3, DK3', SK3, SK3', DTN) are equipped with an up-to-dateness stamp (197), in particular in a high-frequency communication module (35, 37) a buffer memory (41) is present for an up-to-dateness stamp (42, 43, 197), by means of which an associated data set (DK1, DK1', SK1; DK2, DK2', SK2, SK2'; DK3, DK3', SK3, SK3', DTN), is, in particular by an evaluation member (47, 50), qualified as being integratable into the monitoring tupel (179, 181, 183, 185, 187, 189, 191) and comprises in particular a validation complement (199).

7. The emergency lighting system (1, 101) according to one of the preceding claims, **characterized in that**
the monitoring data (DK1, DK1', SK1; DK2, DK2', SK2, SK2'; DK3, DK3', SK3, SK3', DTN), stored at least partly in a buffer memory (41), are then being sent in a time-shifted manner and in particular repeatedly.

8. The emergency lighting system (1, 101) according to one of the preceding Claims 6 or 7, **characterized in that**
a validity is certified by a reception level and/or a checksum.

9. The emergency lighting system (1, 101) according to one of the preceding claims, **characterized in that**
the monitoring tupel (179, 181, 183, 185, 187, 189, 191) is being forwarded via at least on further high-frequency communication module (33, 34, 35, 36, 37, 38, 39, 134, 136, 137, 138, 139) to the luminaire-spanning unit (13, 17, 18; 117), whereby in particular in the monitoring tupel (179, 181, 183, 185, 187, 189, 191) faulty monitoring data (X) have been replaced by usable monitoring data (DK1, DK1', SK1; DK2, DK2', SK2, SK2'; DK3, DK3', SK3, SK3', DTN) from a luminaire (19, 21, 23, 24, 119, 121, 123, 124) connected to the high-frequency communication module (33, 34, 35, 36, 37, 38, 39, 134, 136, 137, 138, 139) and/or from other usable intermediately stored monitoring tupels (181, 183, 185, 187, 189, 191, 179).

10. The emergency lighting system (1, 101) according to one of the preceding claims, **characterized in that**
at least one of the high-frequency communication modules (33, 34, 35, 36, 37, 38, 39, 134, 136, 137, 138, 139), preferably being equipped with at least two different modes (59), a reception mode (55) and a transmission mode (57), remains in a reception mode (55) most of the operating time and in comparison thereto for less time in a transmission mode (57), is in particular in the transmission mode (57) for less than 0,9% of the operating time.

11. The emergency lighting system (1, 101) according to one of the preceding claims 6 to 10, **characterized in that**
the up-to-dateness stamp (42, 43, 197) is synchronized by a central unit (13), in particular by a repeatedly occurring wireless transmission, for a group of high-frequency communication modules (35, 37) or for all high-frequency communication modules (35, 37), in particular there being present in the luminaire-spanning unit a synchronization module (15) having a sequence generator that predetermines the up-to-dateness stamps.

12. The emergency lighting system (1, 101) according to one of the preceding claims, **characterized in that**
the high-frequency communication modules (33, 34, 35, 36, 37, 38, 39, 134, 136, 137, 138, 139) transmit and receive, preferably using a frequency generator, in a frequency band between 140 kHz and 10 GHz, preferably in a frequency band between 868 MHz and 870 MHz, in particular via a wireless connection, or in a frequency band from 140 kHz to 150 kHz, in particular via the lines to be used for data communication.

13. The emergency lighting system (1, 101) according to one of the preceding claims, **characterized in that**
a component of at least one luminaire (19, 21, 23, 24, 119, 121, 123, 124) comprises a high-frequency communication module (36, 37, 38, 39, 136, 137, 138, 139), and in particular a housing component or a frame component, such as a holder or a stay of the luminaire (19, 21, 23, 24; 119, 121, 123, 124), is an antenna (45, 46, 46') of the high-frequency communication module (36, 37, 38, 39, 136, 137, 138, 139).

14. The emergency lighting system (1, 101) according to one of the preceding claims, **characterized in that**
a first high-frequency communication module (33, 34, 35, 36, 37, 38, 39, 134, 136, 137, 138, 139) comprises an amplifier unit (49) for the transmission of a signal of a monitoring tupel (179, 181, 183, 185, 187, 189, 191) transferred by a second high-frequency communication module (34, 35, 36, 37, 38, 39, 134, 136, 137, 138, 139, 33) having a noisy reception intensity, in a transmission intensity amplified in comparison to the reception intensity of the first high-frequency communication module (33, 34, 35, 36, 37, 38, 39, 134, 136, 137, 138, 139), whereby in particular a checking unit (47, 50) connected to the amplifier unit (49) buffers the signal and checks it for transmission errors (X) and updates it in the case of a deviation from a desired value, such as a measurement value of a measurement unit (53, 54) of a luminaire (19, 21, 23, 24, 119, 121, 123, 124) or a data value (DK1, DK1', SK1; DK2, DK2', SK2, SK2'; DK3, DK3', SK3, SK3', DTN) of a buffer memory (41).

15. The emergency lighting system (1, 101) according to one of the preceding claims, **characterized in that**
the luminaire (19, 21, 23, 24, 119, 121, 123, 124) comprises a ballast (51) that is used for the electric supply of the lamps (61) such as LEDs and of the high-frequency communication module (36, 37, 38, 39, 136, 137, 138, 139) with a supply-adapted voltage level and in particular a power of the transmission assembly (40", 41, 43, 45, 47, 49, 53) amounts to less than 20% of a rated power of the luminaire (19, 21, 23, 24, 119, 121, 123, 124).

16. The emergency lighting system (1, 101) according to one of the preceding claims, **characterized in that**
the emergency lighting system (1, 101) is composed of a plurality of disjunctively combined subsystems of emergency lighting systems (1, 101).

17. The emergency lighting system (1, 101) according to one of the preceding claims, **characterized in that**
a first high-frequency communication module (36, 37, 38, 39, 136, 137, 138, 139) and a second high-frequency communication module (36, 37, 38, 39, 136, 137, 138, 139) transmit temporarily in a non-overlapping fashion, in particular transmit at two different points in time, **in that** the high-frequency communication modules (36, 37, 38, 39, 136, 137, 138, 139) determine the transmission time from at least one operating parameter or measurement value that is inherent in the two high-frequency communication modules (36, 37, 38, 39, 136, 137, 138, 139) such as a device number, a commissioning time of the high-frequency communication module, an oscillator frequency or a reception level.

18. A data-transmission method of an emergency lighting system (1, 101) that comprises a plurality of luminaires (19, 21, 23, 24; 119, 121, 123, 124) and a plurality of high-frequency communication modules (33, 34, 35, 36, 37, 38, 39, 134, 136, 137, 138, 139),
**characterized in that**
one of the high-frequency communication modules (33, 34, 35, 36, 37, 38, 39, 134, 136, 137, 138, 139) is set to data reception during a period of time,
buffers data (DK1, DK1', SK1; DK2, DK2', SK2, SK2'; DK3, DK3', SK3, SK3', DTN, X) received in this period of time,
faulty monitoring data (X) are replaced by usable monitoring data (DK1, DK1', SK1; DK2, DK2', SK2, SK2'; DK3, DK3', SK3, SK3', DTN) from a luminaire (19, 21, 23, 24; 119, 121, 123, 124) connected to the high-frequency communication module (33, 34, 35, 36, 37, 38, 39; 134, 136, 137, 138, 139) and/or from other usable buffered data (DK1, DK1', SK1; DK2, DK2', SK2, SK2'; DK3, DK3', SK3, SK3', DTN) and these updated data are subsequently transmitted as a monitoring tupel (179, 181, 183, 185, 187, 189, 191) via at least one further high-frequency communication module (35, 36, 37, 38, 39, 34; 136, 137, 138, 139, 134) to a luminaire-spanning unit (13, 17, 18; 117) by means of repeated transmission.

19. The data-transmission method of an emergency lighting system (1, 101) according to Claim 18, **characterized in that**
the usable buffered data (DK1, DK1', SK1; DK2, DK2', SK2, SK2'; DK3, DK3', SK3, SK3'; DTN) are transmitted as a monitoring tupel (179, 181, 183, 185, 187, 189, 191) during a period of time that is shorter than the period of time of the data reception.

20. The data-transmission method of an emergency lighting system (1, 101) according to one of Claims 18 to 19, **characterized in that**
the high-frequency communication module (17, 18; 117) carries out an up-to-dateness check, in particular using one or more up-to-dateness stamps (42, 43, 197), of the buffered data (DK1, DK1', SK1; DK2, DK2', SK2, SK2'; DK3, DK3', SK3, SK3', DTN, X), and
in the case of a certified up-to-dateness carries out a logical combination of the data (DK1, DK1', SK1; DK2, DK2', SK2, SK2'; DK3, DK3', SK3, SK3', DTN, X), to form from this a monitoring tupel (179, 181, 183, 185, 187, 189, 191), in particular for the transfer of control data (SK1, SK2, SK2', SK3, SK3', DTN) and/or checking data (DK1, DK1', DK2, DK2', DK3, DK3', DTN) from a first emergency luminaire (19, 21, 23, 24; 119, 121, 123, 124) to a second emergency luminaire (21, 23, 24, 19; 121, 123, 124, 119) or a repeater (29, 19, 21, 23, 24, 119, 121, 123, 124; 17, 18; 117).

## Revendications

1. Installation d'éclairage de secours (1, 101) comprenant :
une unité de gestion globale des luminaires (13, 17, 18 ; 117),
plusieurs modules de communication haute fréquence (33, 34, 35, 36, 37, 38, 39 ; 134, 136, 137, 138, 139)
et plusieurs luminaires (19, 21, 23, 24 ; 119, 121, 123, 124), cependant que ces luminaires (19, 21, 23, 24 ; 119, 121, 123, 124) sont associés respectivement à un module de communication haute fréquence (33, 34, 35, 36, 37, 38, 39 ; 134, 136, 137, 138, 139) et doivent être surveillés au moyen de l'unité de gestion globale des luminaires (13, 17, 18 ; 117) qui comprend l'un des plusieurs modules de communication haute fréquence, cependant que les modules de communication haute fréquence sont destinés respectivement à la transmission de données (DK1, DK1', SK1 ; DK2, DK2', SK2, SK2' ; DK3, DK3', SK3, SK3' ; DTN) des luminaires (19, 21, 23, 24 ; 119, 121, 123, 124) à l'unité de gestion globale des luminaires (13, 17, 18 ; 117),
**caractérisée en ce que** respectivement un module de communication haute fréquence est intégré à respectivement un luminaire, cependant que les modules de communication haute fréquence sont conçus comme suit :
a) pour recueillir des données externes (DK2, DK2', SK2, SK2' ; DK3, DK3', SK3, SK3' ; DTN) d'autres luminaires (21, 23, 24 ; 121, 123, 124) ;
b) pour être un combinateur de propres données (DK1, DK1', SK1) et de données externes (DK2, DK2', SK2, SK2' ; DK3, DK3', SK3, SK3' ; DTN) d'autres luminaires (21, 23, 24 ; 121, 123, 124) ;
c) pour former un tuple de surveillance (179, 181, 183, 185, 187, 189, 191) qui contient aussi bien les propres données (DK1, DK1' ; SK1) du propre luminaire (19 ; 119) que les données externes (DK2, DK2', SK2, SK2' ; DK3, DK3', SK3, SK3' ; DTN) d'autres luminaires (21, 23, 24 ; 121, 123, 124),
cependant que des données (DK1, DK1', SK1 ; DK2, DK2', SK2, SK2' ; DK3, DK3', SK3, SK3' ; DTN) du tuple de surveillance sont analysées, sont stockées dans une mémoire intermédiaire (41), que des données de surveillance erronées (X) peuvent alors être remplacées par des données de surveillance exploitables (DK1, DK1' ; DK2, DK2' ; DK3, DK3' ; DTN) et qu'il est formé un tuple de surveillance ainsi actualisé,
d) pour transmettre les données (DK1, DK1', SK1 ; DK2, DK2', SK2, SK2' ; DK3, DK3', SK3, SK3' ; DTN) par un envoi répété en tant que tuple de surveillance actualisé conjointement pour le traitement à l'unité de gestion globale des luminaires par l'intermédiaire du module de communication haute fréquence associé à cette unité de gestion globale des luminaires.

2. Installation d'éclairage de secours (1, 101) selon la revendication 1, **caractérisée en ce que** l'installation d'éclairage de secours (1, 101) comprend une surveillance de luminaires globale pour les luminaires (32).

3. Installation d'éclairage de secours (1, 101) selon la revendication 1 ou 2, **caractérisée en ce que** les données de surveillance (DK2, DK2', SK2, SK2' ; DK3, DK3', SK3, SK3' ; DTN ; DK1, DK1' ; SK1) sont reçues au moyen d'un module de transmission (40, 40', 40") et qu'elles sont stockées dans une mémoire intermédiaire.

4. Installation d'éclairage de secours (1, 101) selon l'une des revendications précédentes, **caractérisée en ce que** l'installation d'éclairage de secours (1, 101) est une installation avec une alimentation en énergie intégrée (30, 31), comme une installation centrale de batteries, une installation de batterie de groupe ou plusieurs accumulateurs (30, 31) répartis dans l'installation d'éclairage de secours (1, 101), par laquelle une alimentation en énergie par câble (30, 31) des lampes (61) des luminaires (19, 21, 23, 24, 119, 121, 123, 124) a lieu, en particulier au moyen d'un élément de commutation, lorsqu'une alimentation secteur, qui doit être vérifiée de préférence par un contrôleur de tension secteur, fait défaut au sein de limites de qualité minimale telles qu'une tension de crête respectée de 60% ou de 85%.

5. Installation d'éclairage de secours (1, 101) selon l'une des revendications précédentes, **caractérisée en ce que** l'installation d'éclairage de secours (1, 101) comprend, pour une communication de données, au moins un répéteur (29 ; 19, 21, 23, 24 ; 119, 121, 123, 124 ; 17, 18, 117) avec un module de communication haute fréquence (35, 33, 34, 36, 37, 38, 39 ; 134, 136, 137, 138, 139).

6. Installation d'éclairage de secours (1, 101) selon l'une des revendications précédentes, **caractérisée en ce que** les données de surveillance (DK1, DK1', SK1 ; DK2, DK2', SK2, SK2' ; DK3, DK3', SK3, SK3' ; DTN) sont dotées d'un tampon d'actualité (197), en particulier qu'il existe dans un module de communication haute fréquence (35, 37) une mémoire intermédiaire (41) pour un tampon d'actualité (42, 43, 197) par lequel un jeu de données correspondant (DK1, DK1', SK1 ; DK2, DK2', SK2, SK2' ; DK3, DK3', SK3, SK3' ; DTN) est qualifié, en particulier par un élément d'évaluation (47, 50), comme étant intégrable dans le tuple de surveillance (179, 181, 183, 185, 187, 189, 191) et comprend en particulier un complément de validité (199).

7. Installation d'éclairage de secours (1, 101) selon l'une des revendications précédentes, **caractérisée en ce que** les données de surveillance (DK1, DK1', SK1 ; DK2, DK2', SK2, SK2' ; DK3, DK3', SK3, SK3' ; DTN) qui sont au moins partiellement stockées dans une mémoire intermédiaire (41) sont ensuite envoyées en différé et en particulier de manière répétée.

8. Installation d'éclairage de secours (1, 101) selon l'une des revendications précédentes 6 ou 7, **caractérisée en ce qu'**une validité est attestée par un niveau de réception et/ou une somme de contrôle.

9. Installation d'éclairage de secours (1, 101) selon l'une des revendications précédentes, **caractérisée en ce que** le tuple de surveillance (179, 181, 183, 185, 187, 189, 191) est transmis par au moins un autre module de communication haute fréquence (33, 34, 35, 36, 37, 38, 39, 134, 136, 137, 138, 139) à l'unité de gestion globale des luminaires (13, 17, 18 ; 117), cependant que des données de surveillance erronées (X) en particulier dans le tuple de surveillance (179, 181, 183, 185, 187, 189, 191) ont été remplacées par des données de surveillance exploitables (DK1, DK1' ; SK1 ; DK2, DK2', SK2, SK2' ; DK3, DK3', SK3, SK3' ; DTN) provenant d'un luminaire (19, 21, 23, 24, 119, 121, 123, 124) raccordé au module de communication haute fréquence (33, 34, 35, 36, 37, 38, 39, 134, 136, 137, 138, 139) et/ou d'autres tuples de surveillance (181, 183, 185, 187, 189, 191, 179) exploitables stockés temporairement.

10. Installation d'éclairage de secours (1, 101) selon l'une des revendications précédentes, **caractérisée en ce qu'**au moins l'un des modules de communication haute fréquence (33, 34, 35, 36, 37, 38, 39, 134, 136, 137, 138, 139) est équipé de préférence d'au moins deux modes différents (59), d'un mode de réception (55) et d'un mode de transmission (57), reste la majorité du temps de fonctionnement dans un mode de réception (55) et en comparaison moins de temps dans un mode de transmission (57), en particulier se trouve moins de 0,9% du temps de fonctionnement en mode de transmission (57).

11. Installation d'éclairage de secours (1, 101) selon l'une des revendications précédentes 6 à 10, **caractérisée en ce que** le tampon d'actualité (42, 43, 197) est synchronisé par une unité centrale (13), en particulier par une transmission radio qui s'effectue de manière répétée, pour un groupe de modules de communication haute fréquence (35, 37) ou pour tous les modules de communication haute fréquence (35, 37), en particulier qu'il existe dans l'unité de gestion globale des luminaires un module de synchronisation (15) avec un générateur de séquence qui prédéfinit les tampons d'actualité.

12. Installation d'éclairage de secours (1, 101) selon l'une des revendications précédentes, **caractérisée en ce que** les modules de communication haute fréquence (33, 34, 35, 36, 37, 38, 39, 134, 136, 137, 138, 139) émettent et reçoivent, de préférence avec un générateur de fréquence, dans une bande de fréquence entre 140 kHz et 10 GHz, de préférence dans une bande de fréquence entre 868 MHz et 870 MHz, en particulier par une liaison radio ou dans une bande de fréquence de 140 kHz à 150 kHz, en particulier par des câbles qui doivent être utilisés pour la communication de données.

13. Installation d'éclairage de secours (1, 101) selon l'une des revendications précédentes, **caractérisée en ce qu'**un composant d'au moins un luminaire (19, 21, 23, 24, 119, 121, 123, 124) comprend un module de communication haute fréquence (36, 37, 38, 39, 136, 137, 138, 139) et en particulier qu'un composant du boîtier ou un composant du cadre, comme un support ou une entretoise du luminaire (19, 21, 23, 24, 119, 121, 123, 124), est une antenne (45, 46, 46') du module de communication haute fréquence (36, 37, 38, 39, 136, 137, 138, 139).

14. Installation d'éclairage de secours (1, 101) selon l'une des revendications précédentes, **caractérisée en ce qu'**un premier module de communication haute fréquence (33, 34, 35, 36, 37, 38, 39, 134, 136, 137, 138, 139) comprend une unité d'amplificateur (49) pour la transmission d'un signal d'un tuple de surveillance (179, 181, 183, 185, 187, 189, 191) envoyé par un second module de communication haute fréquence (34, 35, 36, 37, 38, 39, 134, 136, 137, 138, 139, 33) avec une intensité de réception dotée de bruit dans une intensité d'émission du premier module de communication haute fréquence (33, 34, 35, 36, 37, 38, 39, 134, 136, 137, 138, 139) amplifiée par comparaison avec l'intensité de réception, cependant qu'en particulier une unité de contrôle (47, 50) reliée à l'unité d'amplificateur (49) stocke de manière intermédiaire le signal et vérifie s'il y a des erreurs de transmission (X) et l'actualise, lors d'un écart par rapport à une valeur de consigne, comme une valeur de mesure d'une unité de mesure (53, 54) d'un luminaire (19, 21, 23, 24, 119, 121, 123, 124) ou une valeur de données (DK1, DK1', SK1 ; DK2, DK2', SK2, SK2' ; DK3, DK3', SK3, SK3', DTN) d'une mémoire intermédiaire (41).

15. Installation d'éclairage de secours (1, 101) selon l'une des revendications précédentes, **caractérisée en ce que** le luminaire (19, 21, 23, 24, 119, 121, 123, 124) comprend un ballast (51) qui est utilisé pour l'alimentation électrique des lampes (61) comme des DELs et du module de communication haute fréquence (36, 37, 38, 39, 136, 137, 138, 139) avec un niveau de tension en conformité avec l'alimentation et qu'en particulier une puissance du module de transmission (40", 41, 43, 45, 47, 49, 53) est de moins de 20% d'une puissance nominale du luminaire (19, 21, 23, 24, 119, 121, 123, 124).

16. Installation d'éclairage de secours (1, 101) selon l'une des revendications précédentes, **caractérisée en ce que** l'installation d'éclairage de secours (1, 101) se compose de plusieurs sous-systèmes d'installations d'éclairage de secours (1, 101) associés de manière disjonctive.

17. Installation d'éclairage de secours (1, 101) selon l'une des revendications précédentes, **caractérisée en ce qu'**un premier module de communication haute fréquence (36, 37, 38, 39, 136, 137, 138, 139) et un second module de communication haute fréquence (36, 37, 38, 39, 136, 137, 138, 139) émettent temporairement sans chevauchement, en particulier à deux moments différents, les modules de communication haute fréquence (36, 37, 38, 39, 136, 137, 138, 139) déterminant le moment de l'émission à partir d'au moins un paramètre de fonctionnement ou une valeur de mesure qui est propre aux deux modules de communication haute fréquence (36, 37, 38, 39, 136, 137, 138, 139) comme un numéro d'appareil, un moment de mise en service du module de communication haute fréquence, une fréquence d'oscillateur ou un niveau de réception.

18. Procédé de transmission de données d'une installation d'éclairage de secours (1, 101) qui comprend plusieurs luminaires (19, 21, 23, 24 ; 119, 121, 123, 124) et plusieurs modules de communication haute fréquence (33, 34, 35, 36, 37, 38, 39, 134, 136, 137, 138, 139), **caractérisé en ce que** l'un des modules de communication haute fréquence (33, 34, 35, 36, 37, 38, 39, 134, 136, 137, 138, 139) est sur réception de données pendant une période, stocke temporairement des données (DK1, DK1', SK1 ; DK2, DK2', SK2, SK2' ; DK3, DK3', SK3, SK3' ; DTN, X) reçues pendant cette période, remplace des données de surveillance erronées (X) par des données de surveillance exploitables (DK1, DK1', SK1 ; DK2, DK2', SK2, SK2' ; DK3, DK3', SK3, SK3' ; DTN) provenant d'un luminaire (19, 21, 23, 24 ; 119, 121, 123, 124) raccordé au module de communication haute fréquence (33, 34, 35, 36, 37, 38, 39 ; 134, 136, 137, 138, 139) et/ou d'autres données exploitables stockées temporairement (DK1, DK1', SK1 ; DK2, DK2', SK2, SK2' ; DK3, DK3', SK3, SK3' ; DTN) et que ces données actualisées sont ensuite transmises comme tuple de surveillance (179, 181, 183, 185, 187, 189, 191) par au moins un autre module de communication haute fréquence (35, 36, 37, 38, 39, 34 ; 136, 137, 138, 139, 134) à une unité de gestion globale des luminaires (13, 17, 18 ; 117) par envoi répété.

19. Procédé de transmission de données d'une installation d'éclairage de secours (1, 101) selon la revendication 18, **caractérisé en ce que** les données exploitables stockées temporairement (DK1, DK1', SK1 ; DK2, DK2', SK2, SK2' ; DK3, DK3', SK3, SK3' ; DTN) sont envoyées en tant que tuple de surveillance (179, 181, 183, 185, 187, 189, 191) pendant une période qui est plus courte que la période de la réception de données.

20. Procédé de transmission de données d'une installation d'éclairage de secours (1, 101) selon l'une des revendications précédentes 18 à 19, **caractérisé en ce que** le module de communication haute fréquence (17, 18 ; 117) exécute une vérification d'actualité, en particulier à l'aide d'un ou de plusieurs tampons d'actualité (42, 43, 197) des données stockées temporairement (DK1, DK1', SK1 ; DK2, DK2', SK2, SK2' ; DK3, DK3', SK3, SK3' ; DTN, X) et, lorsque l'actualité est accepté, exécute une liaison logique des données (DK1, DK1', SK1 ; DK2, DK2', SK2, SK2' ; DK3, DK3', SK3, SK3' ; DTN, X) pour en former un tuple de surveillance (179, 181, 183, 185, 187, 189, 191), en particulier pour la transmission de données de commande (SK1, SK2, SK2', SK3, SK3', DTN) et/ou de données de contrôle (DK1, DK1', DK2, DK2', DK3, DK3', DTN) d'un premier luminaire d'éclairage de secours (19, 21, 23, 24 ; 119, 121, 123, 124) à un second luminaire d'éclairage de secours (21, 23, 24, 19 ; 121, 123, 124, 119) ou un répéteur (29, 19, 21, 23, 24, 119, 121, 123, 124 ; 17, 18 ; 117).
